# EUROPEAN PATENT APPLICATION

(11) **EP 4 707 285 A1**
(43) Date of publication of application: **11.03.2026**
(21) Application number: 24797522.0
(22) Date of filing: 15.02.2024
(51) Int. Cl.: C07F 17/00, C08F 4/6592, C08F 4/659, C08F 10/00

(54) **METALLOCENE COMPOUND, PRECURSOR THEREOF, AND METHOD FOR PREPARING SAME**

(30) Priority: 24.04.2023 KR 20230053481
(71) Applicant: Hanwha Solutions Corporation, Seoul 04541 (KR)
(72) Inventor: PARK, Ran Wha, Seoul 04541 (KR); JUN, Sung Hae, Seoul 04541 (KR); LEE, Won Jong, Seoul 04541 (KR); KIM, Kyung Woo, Seoul 04541 (KR); PARK, Seong Yeon, Seoul 04541 (KR); JEONG, Tae Ho, Seoul 04541 (KR); KIM, Dong Wook, Seoul 04541 (KR)
(74) Representative: Berggren Oy
(86) International application number: PCT/KR2024/095183
(87) International publication number: WO 2024/225868

(57) **Abstract**

The metallocene compound of the present disclosure is represented by the following Chemical Formula 1: 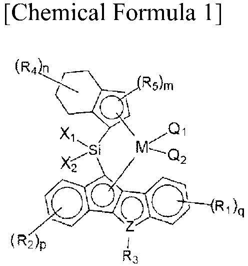 (Z, R₁, R₂, R₃, R₄, R₅, n, m, p, q, X₁, X₂, Q₁, and Q₂ are as defined in the specification.)

## Description

### [Technical Field]

The present invention relates to a metallocene compound having a novel structure, a precursor, and a method for preparing the same.

### [Background Art]

Metallocene catalysts are compounds in which a ligand such as a cyclopentadienyl group, an indenyl group, or a cycloheptadienyl group is coordinately bonded to a transition metal or transition metal halide compound, and they are used as catalysts for olefin polymerization.

The metallocene catalysts are single-site catalysts composed of the metallocene compound and a cocatalyst such as methylaluminoxane. Polymers polymerized with a metallocene catalyst have a narrow molecular weight distribution, a uniform distribution of comonomers, and higher copolymerization activity than those polymerized with a Ziegler-Natta catalyst.

The related art includes Korean Patent Publication No. 2021-48677.

### [Disclosure]

### [Technical Problem]

An object of the present invention is to provide a metallocene compound having a novel structure, a precursor, and a method for preparing the same.

The above-described object and other objects of the present invention may all be achieved by the invention described below.

### [Technical Solution]

1. One aspect of the present invention relates to a metallocene compound. The metallocene compound is represented by the following Chemical Formula 1: 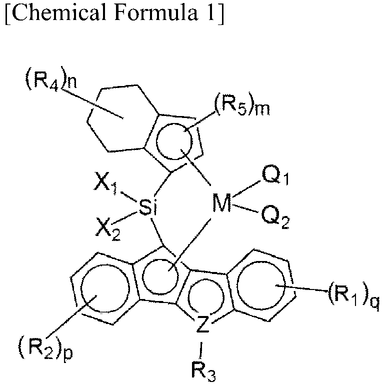 wherein, in Chemical Formula 1,
   M is titanium (Ti), zirconium (Zr), or hafnium (Hf),
   Z is N,
   R₁ and R₂ are each independently hydrogen, a halogen, a substituted or unsubstituted C₁₋₂₀ alkyl group, a substituted or unsubstituted C₂₋₂₀ alkenyl group, a substituted or unsubstituted C₆₋₂₀ aryl group, a substituted or unsubstituted C₁₋₂₀ heteroalkyl group, a substituted or unsubstituted C₃₋₂₀ heteroaryl group, a substituted or unsubstituted C₁₋₂₀ alkylamido group, or a substituted or unsubstituted C₆₋₂₀ arylamido group,
   R₃ is a substituted or unsubstituted C₁₋₂₀ alkyl group, a substituted or unsubstituted C₁₋₂₀ alkoxy group, a substituted or unsubstituted C₂₋₂₀ alkoxyalkyl group, a substituted or unsubstituted C₂₋₂₀ alkenyl group, a substituted or unsubstituted C₃₋₂₀ cycloalkyl group, a substituted or unsubstituted C₃₋₂₀ heterocycloalkyl group, a substituted or unsubstituted C₇₋₄₀ alkylaryl group, a substituted or unsubstituted C₇₋₄₀ arylalkyl group, a substituted or unsubstituted C₆₋₂₀ aryl group, a substituted or unsubstituted C₆₋₂₀ aryloxy group, or a substituted or unsubstituted C₃₋₂₀ heteroaryl group,
   R₄ and R₅ are each independently hydrogen, a halogen, a substituted or unsubstituted C₁₋₂₀ alkyl group, or a substituted or unsubstituted C₆₋₂₀ aryl group,
   n is an integer from 0 to 4,
   m is an integer from 0 to 2,
   p and q are each independently an integer from 0 to 4, and
   X₁ and X₂ are each independently a C₁₋₂₀ alkyl group or a C₆₋₂₀ aryl group, and
   Q₁ and Q₂ are each independently a halogen, a C₁₋₂₀ alkyl group, or a C₆₋₂₀ aryl group.
2. In the Embodiment 1, M may be zirconium (Zr),
   R₁ and R₂ may each be a C₁₋₃ alkyl group,
   p may be 0, and q may be 0 or 1,
   R₄ and R₅ may be a C₁₋₃ alkyl group,
   n may be 0, and m may be 0 or 1.
3. In the Embodiments 1 and 2, M may be zirconium (Zr),
   X₁ and X₂ may be each independently a C₁₋₂₀ alkyl group, and
   Q₁ and Q₂ may be each independently a halogen.
4. In the Embodiments 1 to 3, R₃ may have 1 to 10 carbon atoms.
5. In the Embodiments 1 to 4, the metallocene compound may be represented by one of the following structures: 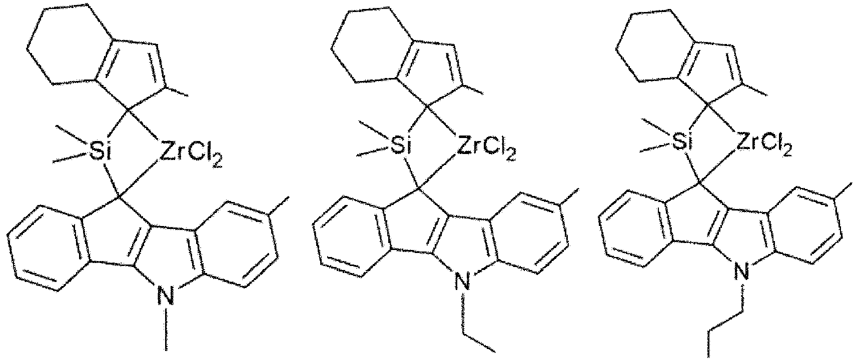 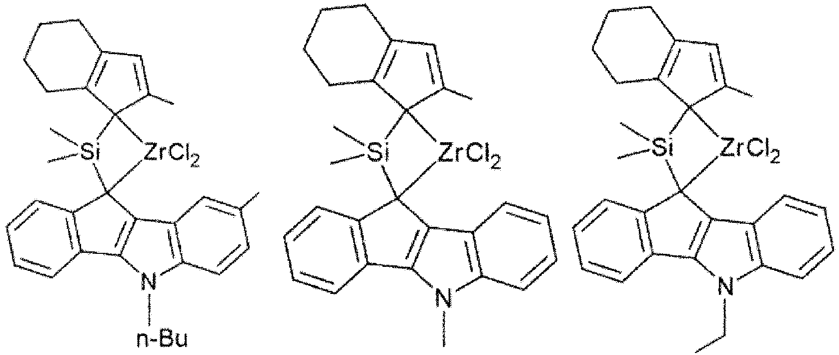 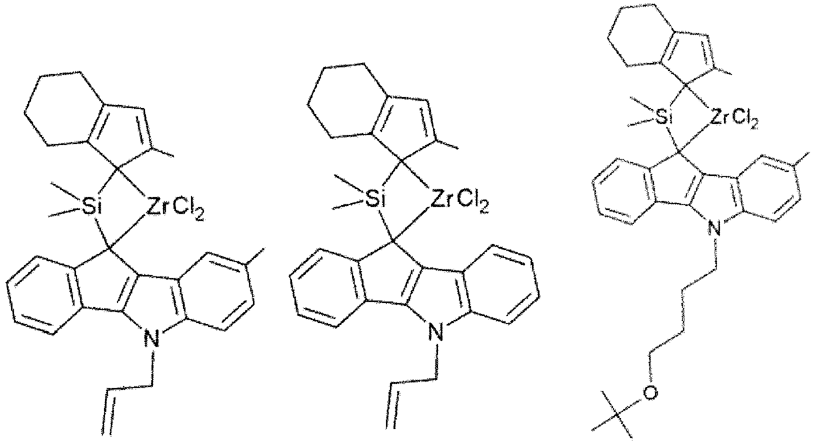 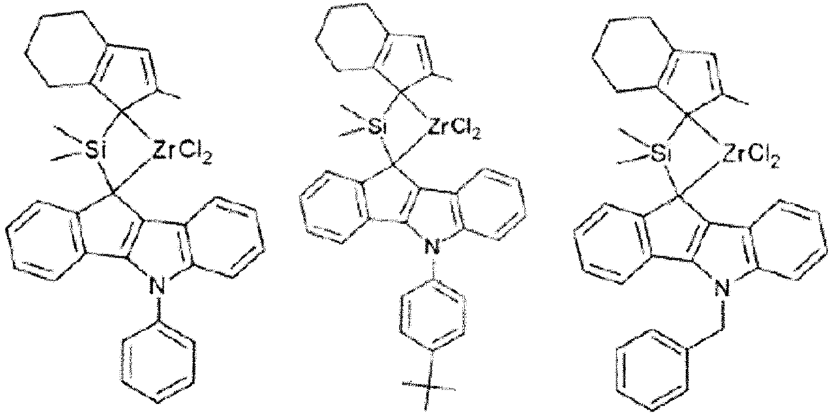 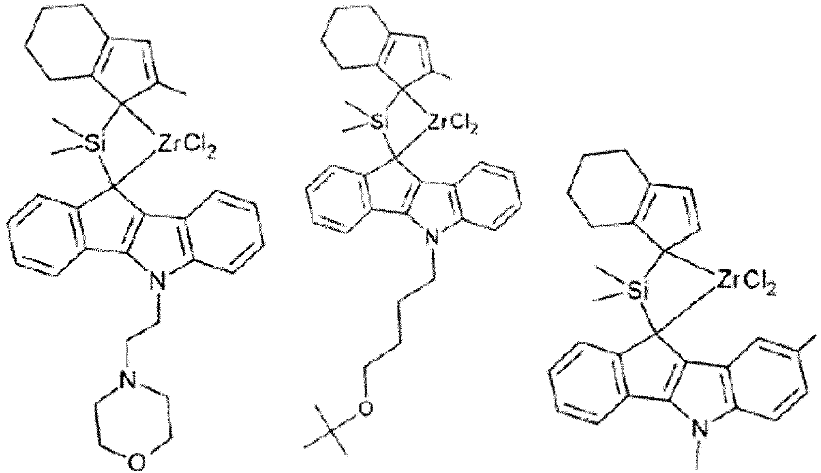 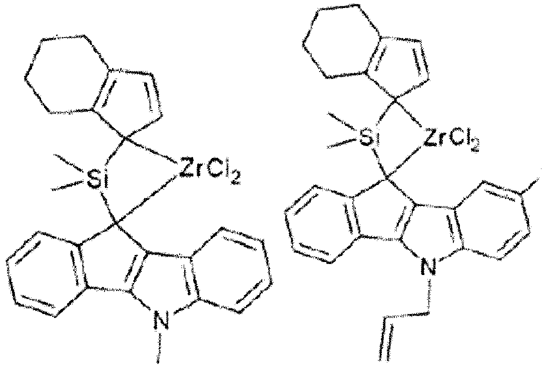
6. In the Embodiments 1 to 5, the metallocene compound may have a compound represented by the following Chemical Formula 2 as a precursor: 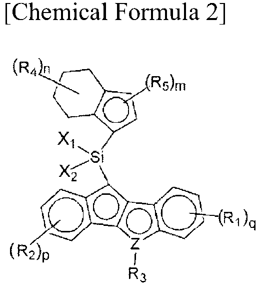 wherein, in Chemical Formula 2,
   Z is N,
   R₁ and R₂ are each independently hydrogen, a halogen, a substituted or unsubstituted C₁₋₂₀ alkyl group, a substituted or unsubstituted C₂₋₂₀ alkenyl group, a substituted or unsubstituted C₆₋₂₀ aryl group, a substituted or unsubstituted C₁₋₂₀ heteroalkyl group, a substituted or unsubstituted C₃₋₂₀ heteroaryl group, a substituted or unsubstituted C₁₋₂₀ alkylamido group, or a substituted or unsubstituted C₆₋₂₀ arylamido group,
   R₃ is a substituted or unsubstituted C₁₋₂₀ alkyl group, a substituted or unsubstituted C₁₋₂₀ alkoxy group, a substituted or unsubstituted C₂₋₂₀ alkoxyalkyl group, a substituted or unsubstituted C₂₋₂₀ alkenyl group, a substituted or unsubstituted C₃₋₂₀ cycloalkyl group, a substituted or unsubstituted C₃₋₂₀ heterocycloalkyl group, a substituted or unsubstituted C₇₋₄₀ alkylaryl group, a substituted or unsubstituted C₇₋₄₀ arylalkyl group, a substituted or unsubstituted C₆₋₂₀ aryl group, a substituted or unsubstituted C₆₋₂₀ aryloxy group, or a substituted or unsubstituted C₃₋₂₀ heteroaryl group,
   R₄ and R₅ are each independently hydrogen, a halogen, a substituted or unsubstituted C₁₋₂₀ alkyl group, or a substituted or unsubstituted C₆₋₂₀ aryl group,
   n is an integer from 0 to 4,
   m is an integer from 0 to 2,
   p and q are each independently an integer from 0 to 4, and
   X₁ and X₂ are each independently a C₁₋₂₀ alkyl group or a C₆₋₂₀ aryl group.
7. In the Embodiment 6, the metallocene catalyst precursor may be represented by one of the following structures: 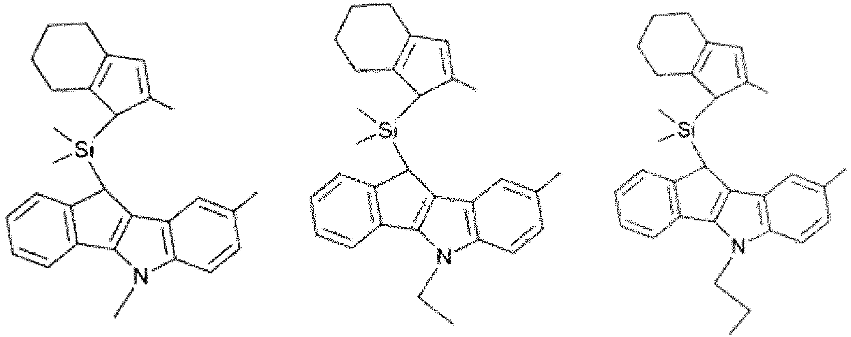 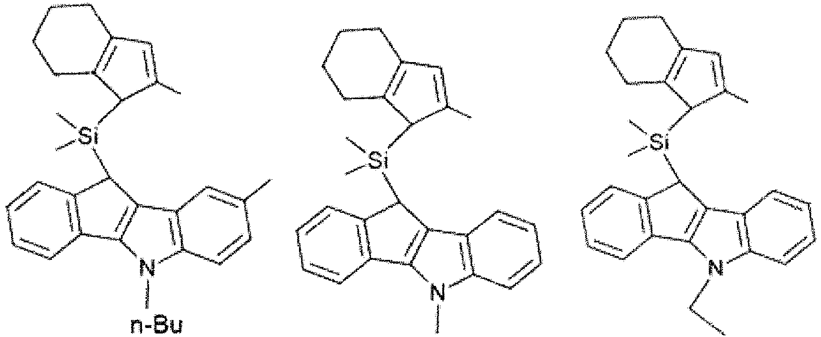 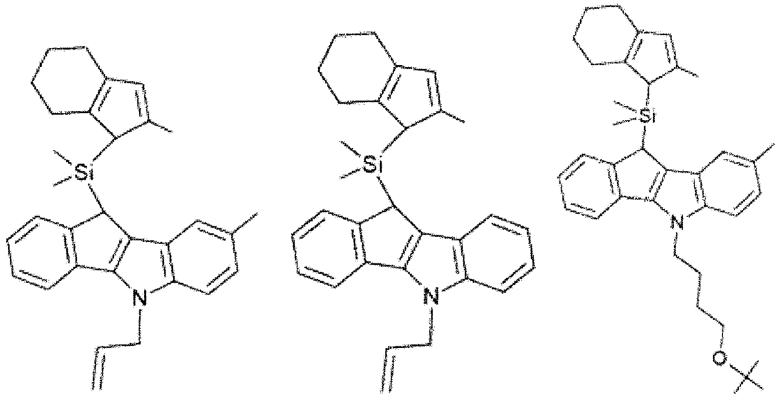 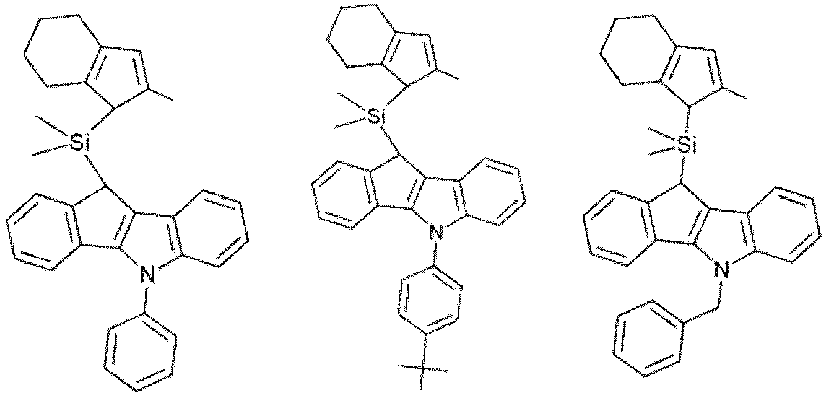 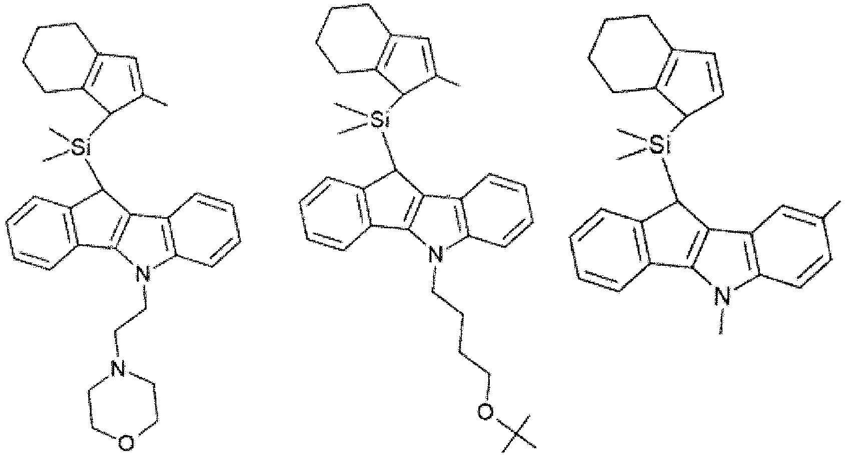 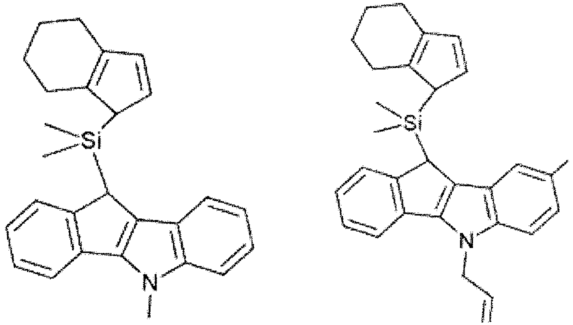
8. In the Embodiments 1 to 7, the metallocene compound may be prepared by: a step of adding an organic lithium compound to the metallocene catalyst precursor to prepare a lithium salt; and a step of allowing the lithium salt to react with a Group 4 transition metal compound.
9. Another aspect of the present invention relates to a metallocene catalyst precursor. The metallocene catalyst precursor is represented by the following Chemical Formula 2: 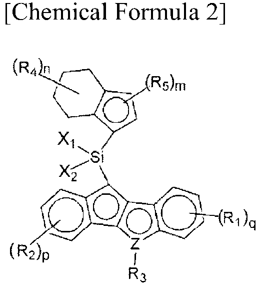 wherein, in Chemical Formula 2,
   Z is N,
   R₁ and R₂ are each independently hydrogen, a halogen, a substituted or unsubstituted C₁₋₂₀ alkyl group, a substituted or unsubstituted C₂₋₂₀ alkenyl group, a substituted or unsubstituted C₆₋₂₀ aryl group, a substituted or unsubstituted C₁₋₂₀ heteroalkyl group, a substituted or unsubstituted C₃₋₂₀ heteroaryl group, a substituted or unsubstituted C₁₋₂₀ alkylamido group, or a substituted or unsubstituted C₆₋₂₀ arylamido group,
   R₃ is a substituted or unsubstituted C₁₋₂₀ alkyl group, a substituted or unsubstituted C₁₋₂₀ alkoxy group, a substituted or unsubstituted C₂₋₂₀ alkoxyalkyl group, a substituted or unsubstituted C₂₋₂₀ alkenyl group, a substituted or unsubstituted C₃₋₂₀ cycloalkyl group, a substituted or unsubstituted C₃₋₂₀ heterocycloalkyl group, a substituted or unsubstituted C₇₋₄₀ alkylaryl group, a substituted or unsubstituted C₇₋₄₀ arylalkyl group, a substituted or unsubstituted C₆₋₂₀ aryl group, a substituted or unsubstituted C₆₋₂₀ aryloxy group, or a substituted or unsubstituted C₃₋₂₀ heteroaryl group,
   R₄ and R₅ are each independently hydrogen, a halogen, a substituted or unsubstituted C₁₋₂₀ alkyl group, or a substituted or unsubstituted C₆₋₂₀ aryl group,
   n is an integer from 0 to 4,
   m is an integer from 0 to 2,
   p and q are each independently an integer from 0 to 4, and
   X₁ and X₂ are each independently a C₁₋₂₀ alkyl group or a C₆₋₂₀ aryl group.
10. In the Embodiment 9, the metallocene catalyst precursor may be represented by one of the following structures: 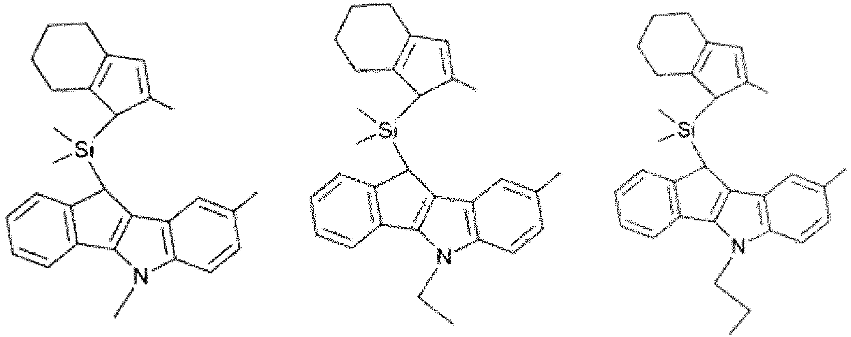 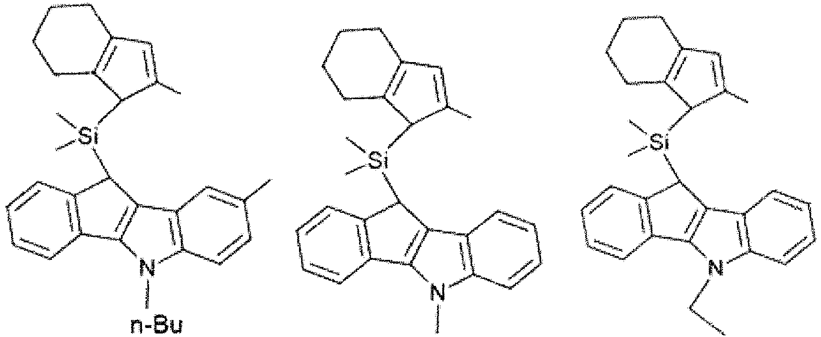 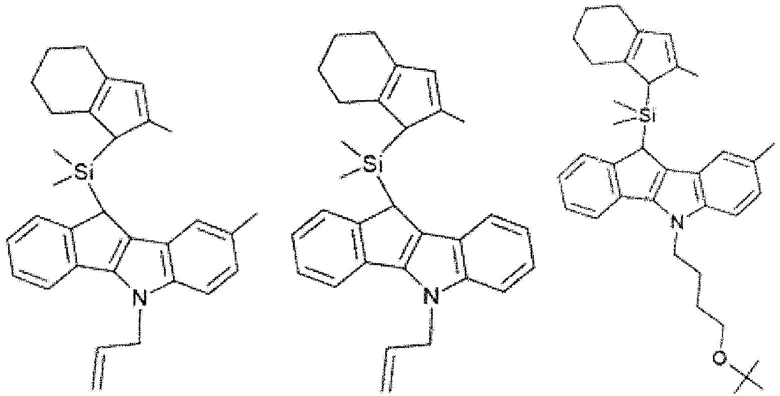 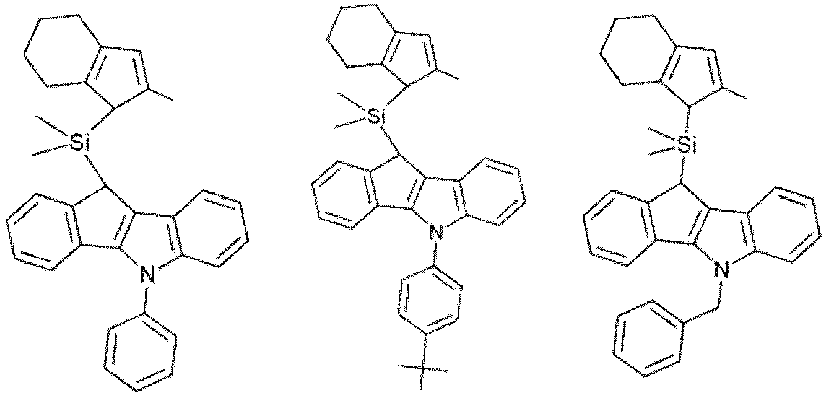 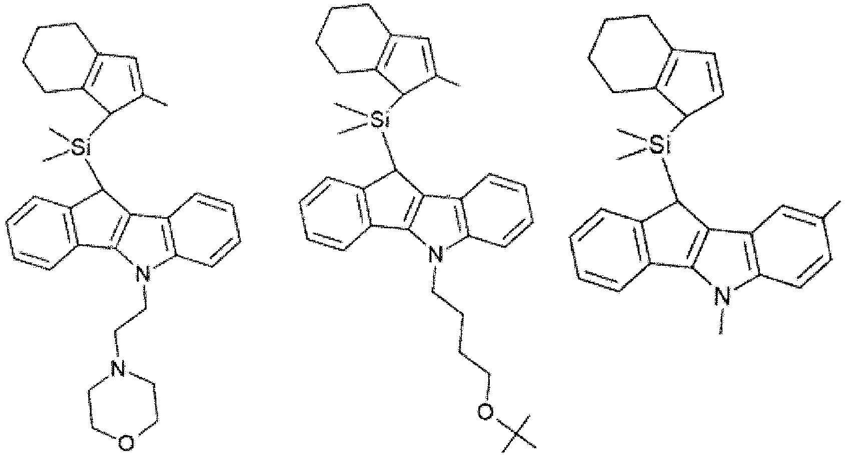 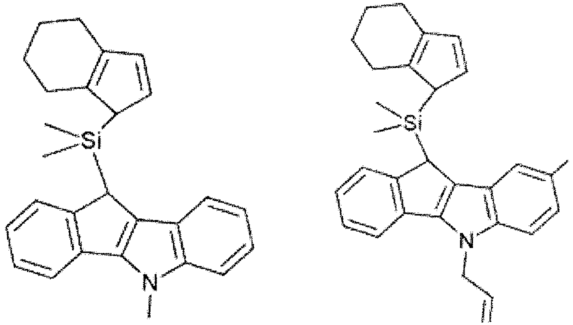
11. Still another aspect of the present invention relates to a method for preparing a metallocene compound represented by Chemical Formula 1. The method includes: a step of adding an organic lithium compound to a metallocene catalyst precursor represented by Chemical Formula 2 to prepare a lithium salt; and allowing the lithium salt to react with a Group 4 transition metal compound.
12. In the Embodiment 11, the Group 4 transition metal compound may include TiCl₄, ZrCl₄, or HfCl₄.
13. In the Embodiments 11 and 12, the metallocene catalyst precursor may be prepared by adding an organic lithium compound to a tetrahydroindene compound represented by the following Chemical Formula 3 to prepare a tetrahydroindene lithium salt; allowing the tetrahydroindene lithium salt to react with a silane compound to prepare a tetrahydroindenyl silane compound; and allowing the tetrahydroindenyl silane compound to react with an indenoindole lithium salt represented by the following Chemical Formula 4.
14. Yet another aspect of the present invention relates to a method for preparing the metallocene catalyst precursor represented by Chemical Formula 2. The method includes: a step of adding an organic lithium compound to a tetrahydroindene compound represented by the following Chemical Formula 3 to prepare a tetrahydroindene lithium salt; a step of allowing the tetrahydroindene lithium salt to react with a silane compound to prepare a tetrahydroindenyl silane compound; and a step of allowing the tetrahydroindenyl silane compound to react with an indenoindole lithium salt represented by the following Chemical Formula 4.
15. Yet another aspect of the present invention relates to a supported metallocene catalyst. The supported metallocene catalyst includes: a metallocene compound represented by the following Chemical Formula 1; and a carrier supporting the metallocene compound.
16. In the Embodiment 15, the carrier may be at least one selected from the group consisting of silica, silica-alumina, and silica-magnesia.
17. In the Embodiments 15 and 16, the supported metallocene catalyst may further include a cocatalyst.

### [Advantageous Effects]

The present invention has the effect of providing a metallocene compound having a novel structure, a precursor, and a method for preparing the same.

### [Description of Drawings]

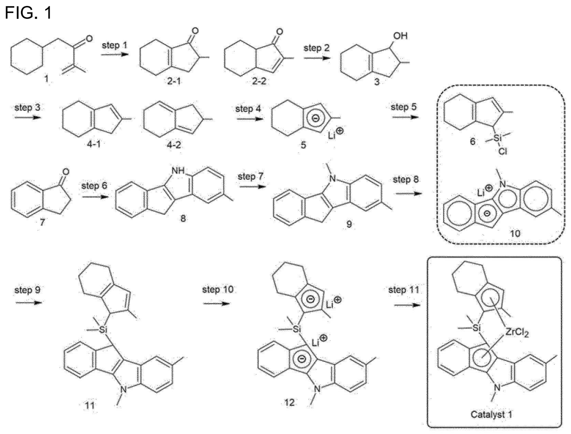

FIG. 1 shows a synthesis scheme of Catalyst 1 of Example 1.

### [Modes of the Invention]

Hereinafter, the present invention will be described in more detail below. When the terms "comprise," "have," and "consist of" are used herein, unless "only" is used, additional parts may be added. When a component is expressed in a singular form, it includes the plural form, unless otherwise explicitly stated.

When interpreting a component, it is interpreted to include a margin of error even when there is no explicit description.

The term "C_{A-B}" as used herein means "having carbon atoms of A or more and B or less," and the term "A to B" means "having carbon atoms of A or more and B or less." The expression "substituted" in the term "substituted or unsubstituted" means that "at least one hydrogen of the hydrocarbon compound or hydrocarbon derivative is substituted with a halogen, a C₁₋₂₀ alkyl group, a C₂₋₂₀ alkenyl group, a C₂₋₂₀ alkynyl group, a C₆₋₂₀ aryl group, a C₁₋₂₀ alkyl C₆₋₂₀ aryl group, a C₆₋₂₀ aryl C₁₋₂₀ alkyl group, a C₁₋₂₀ alkylamido group, a C₆₋₂₀ arylamido group, or a C₂₋₂₀ alkylidene group," and the expression "unsubstituted" means that "at least one hydrogen of the hydrocarbon compound or hydrocarbon derivative is not substituted with a halogen, a C₁₋₂₀ alkyl group, a C₂₋₂₀ alkenyl group, a C₂₋₂₀ alkynyl group, a C₆₋₂₀ aryl group, a C₁₋₂₀ alkyl C₆₋₂₀ aryl group, a C₆₋₂₀ aryl C₁₋₂₀ alkyl group, a C₁₋₂₀ alkylamido group, a C₆₋₂₀ arylamido group, or a C₂₋₂₀ alkylidene group."

The metallocene compound of the present invention is represented by the following Chemical Formula 1: 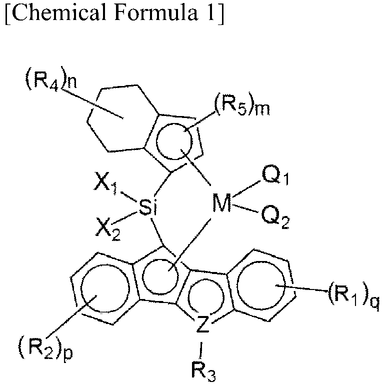 In Chemical Formula 1,
M is titanium (Ti), zirconium (Zr), or hafnium (Hf),
Z is N,
R₁ and R₂ are each independently hydrogen, a halogen, a substituted or unsubstituted C₁₋₂₀ alkyl group, a substituted or unsubstituted C₂₋₂₀ alkenyl group, a substituted or unsubstituted C₆₋₂₀ aryl group, a substituted or unsubstituted C₁₋₂₀ heteroalkyl group, a substituted or unsubstituted C₃₋₂₀ heteroaryl group, a substituted or unsubstituted C₁₋₂₀ alkylamido group, or a substituted or unsubstituted C₆₋₂₀ arylamido group,
R₃ is a substituted or unsubstituted C₁₋₂₀ alkyl group, a substituted or unsubstituted C₁₋₂₀ alkoxy group, a substituted or unsubstituted C₂₋₂₀ alkoxyalkyl group, a substituted or unsubstituted C₂₋₂₀ alkenyl group, a substituted or unsubstituted C₃₋₂₀ cycloalkyl group, a substituted or unsubstituted C₃₋₂₀ heterocycloalkyl group, a substituted or unsubstituted C₇₋₄₀ alkylaryl group, a substituted or unsubstituted C₇₋₄₀ arylalkyl group, a substituted or unsubstituted C₆₋₂₀ aryl group, a substituted or unsubstituted C₆₋₂₀ aryloxy group, or a substituted or unsubstituted C₃₋₂₀ heteroaryl group,
R₄ and R₅ are each independently hydrogen, a halogen, a substituted or unsubstituted C₁₋₂₀ alkyl group, or a substituted or unsubstituted C₆₋₂₀ aryl group,
n is an integer from 0 to 4,
m is an integer from 0 to 2,
p and q are each independently an integer from 0 to 4, and
X₁ and X₂ are each independently a C₁₋₂₀ alkyl group or a C₆₋₂₀ aryl group, and
Q₁ and Q₂ are each independently a halogen, a C₁₋₂₀ alkyl group, or a C₆₋₂₀ aryl group.

In an embodiment, examples of the metallocene may include, but are not limited to, the following structures:

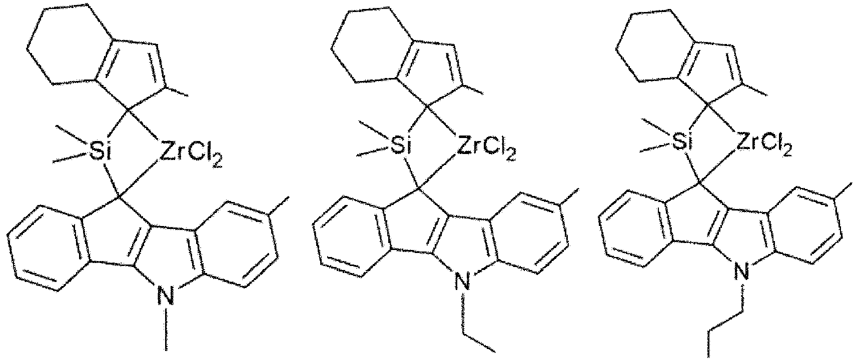

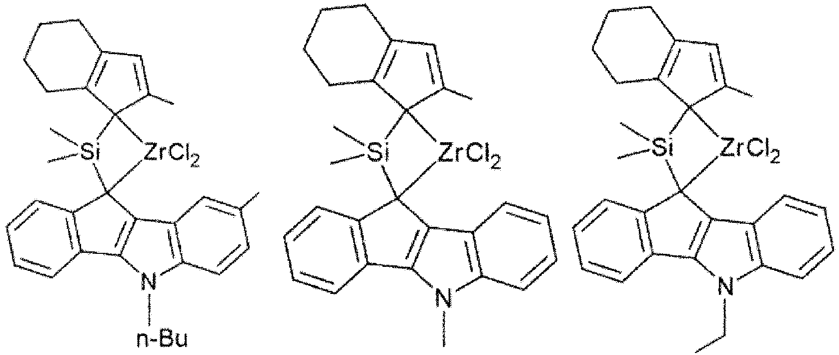

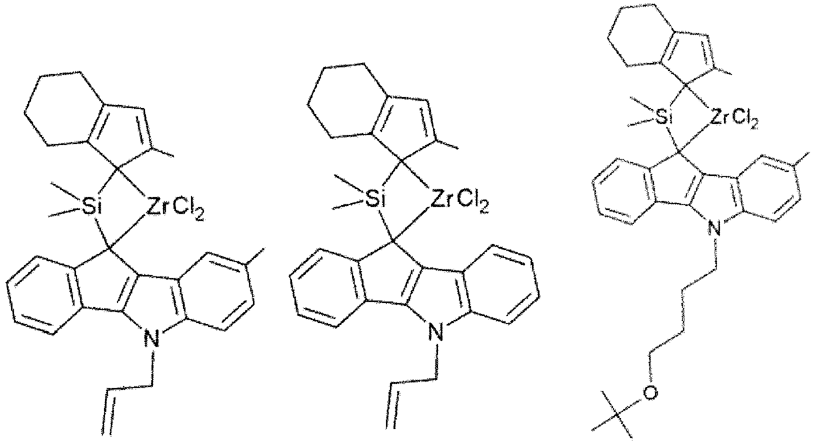

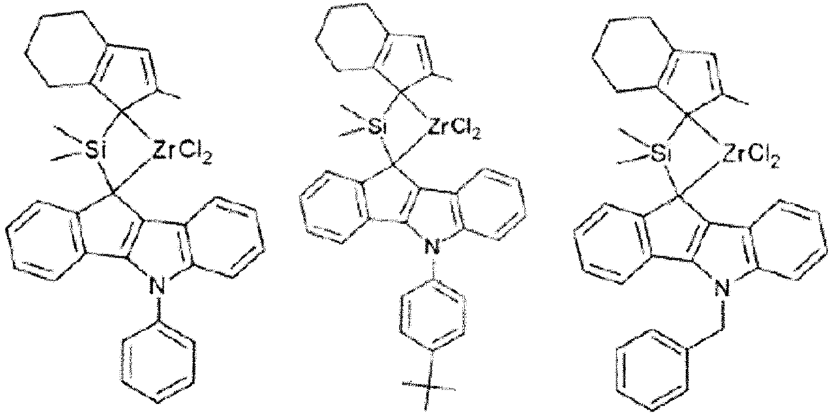

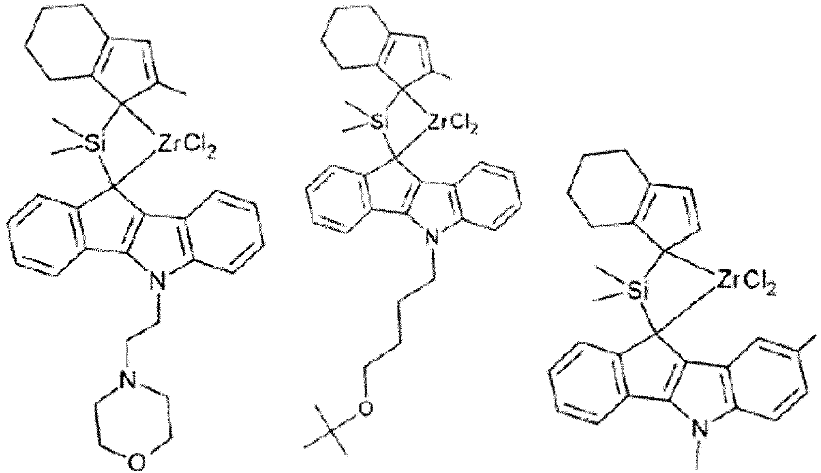

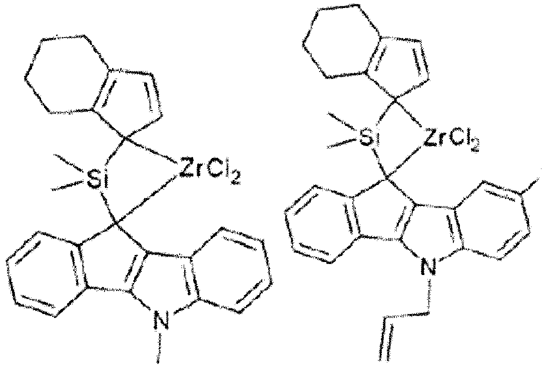

In one embodiment, the metallocene compound may be prepared by: a step of adding an organic lithium compound to a metallocene catalyst precursor represented by Chemical Formula 2 to prepare a lithium salt; and a step of allowing the lithium salt to react with a Group 4 transition metal compound. 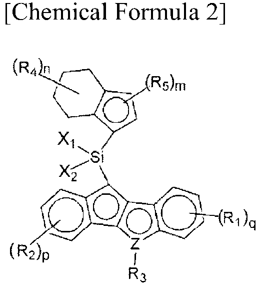 In Chemical Formula 2,
Z is N,
R₁ and R₂ are each independently hydrogen, a halogen, a substituted or unsubstituted C₁₋₂₀ alkyl group, a substituted or unsubstituted C₂₋₂₀ alkenyl group, a substituted or unsubstituted C₆₋₂₀ aryl group, a substituted or unsubstituted C₁₋₂₀ heteroalkyl group, a substituted or unsubstituted C₃₋₂₀ heteroaryl group, a substituted or unsubstituted C₁₋₂₀ alkylamido group, or a substituted or unsubstituted C₆₋₂₀ arylamido group,
R₃ is a substituted or unsubstituted C₁₋₂₀ alkyl group, a substituted or unsubstituted C₁₋₂₀ alkoxy group, a substituted or unsubstituted C₂₋₂₀ alkoxyalkyl group, a substituted or unsubstituted C₂₋₂₀ alkenyl group, a substituted or unsubstituted C₃₋₂₀ cycloalkyl group, a substituted or unsubstituted C₃₋₂₀ heterocycloalkyl group, a substituted or unsubstituted C₇₋₄₀ alkylaryl group, a substituted or unsubstituted C₇₋₄₀ arylalkyl group, a substituted or unsubstituted C₆₋₂₀ aryl group, a substituted or unsubstituted C₆₋₂₀ aryloxy group, or a substituted or unsubstituted C₃₋₂₀ heteroaryl group,
R₄ and R₅ are each independently hydrogen, a halogen, a substituted or unsubstituted C₁₋₂₀ alkyl group, or a substituted or unsubstituted C₆₋₂₀ aryl group,
n is an integer from 0 to 4,
m is an integer from 0 to 2,
p and q are each independently an integer from 0 to 4, and
X₁ and X₂ are each independently a C₁₋₂₀ alkyl group or a C₆₋₂₀ aryl group.

Specific examples of Chemical Formula 2 may include, but are not limited to, the following chemical formulas:

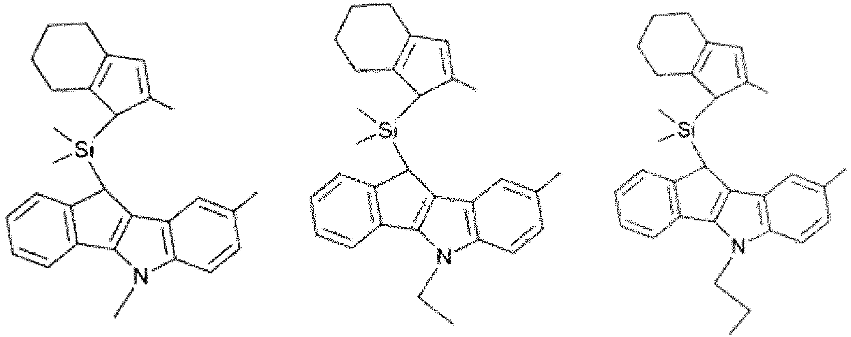

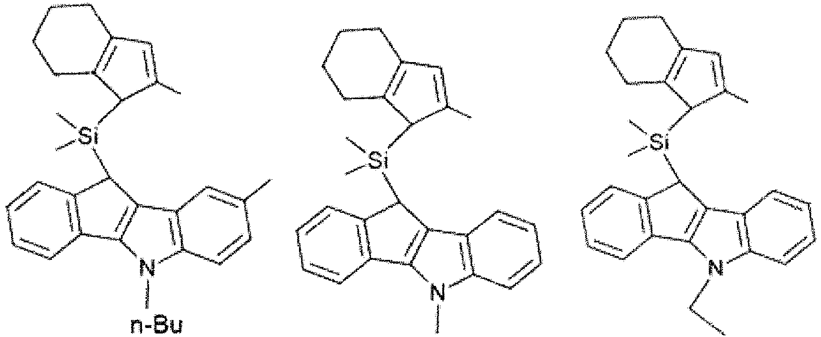

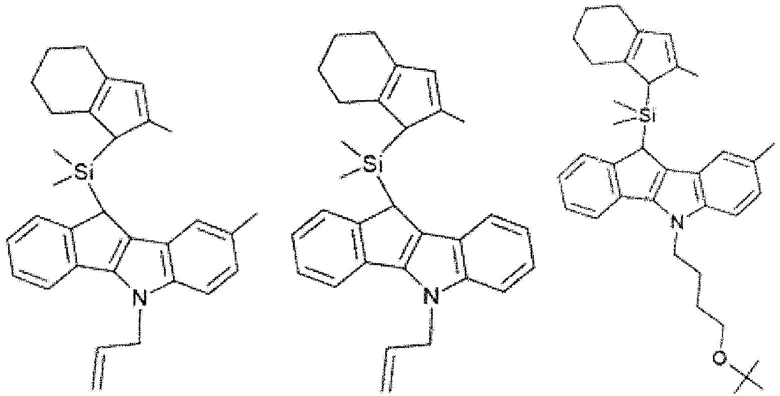

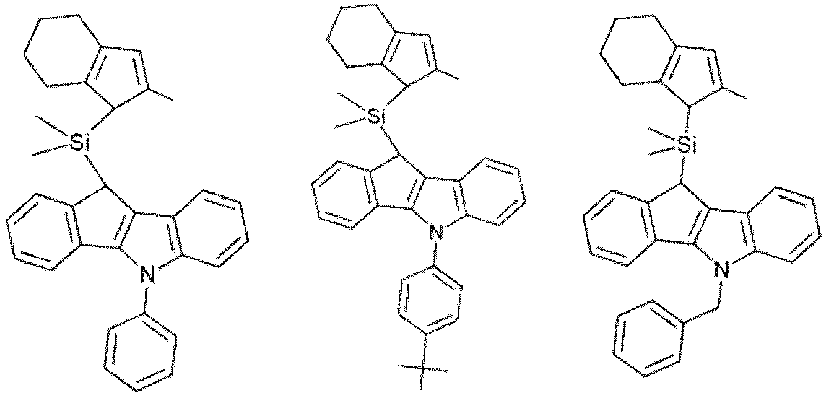

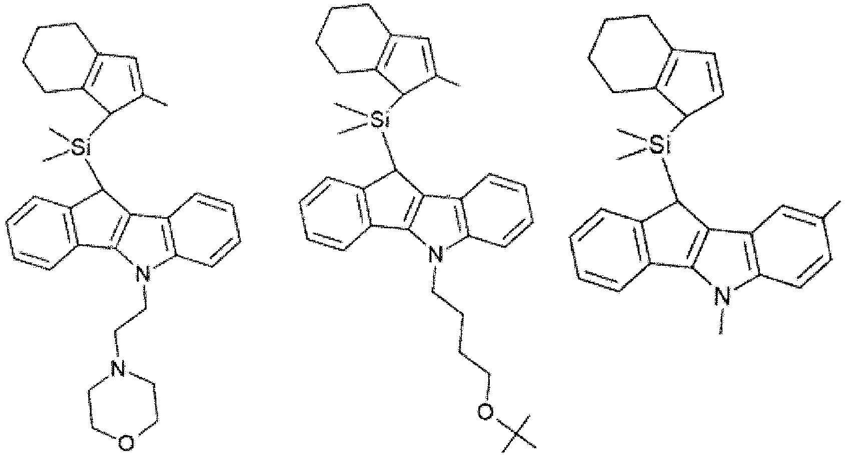

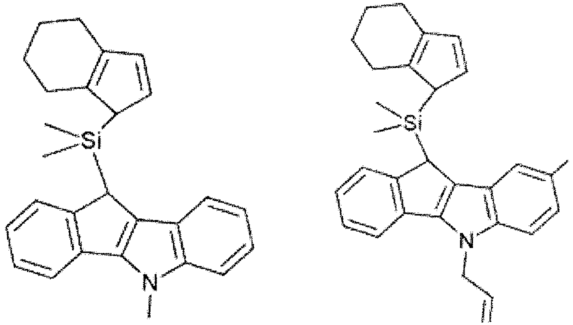

In one embodiment, the metallocene catalyst precursor may be dissolved in a non-polar solvent, and then an organic lithium compound may be slowly added dropwise to react at room temperature to prepare a lithium salt of the following Chemical Formula 3:

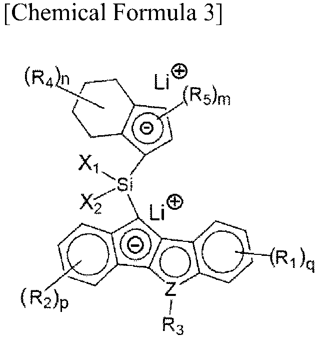

In Chemical Formula 3, Z, R₁, R₂, R₃, R₄, R₅, X₁, X₂, n, m, p, and q are as defined in Chemical Formula 2.

An alkyl lithium may be used as the organic lithium compound. The alkyl lithium may be an alkyl lithium having 1 to 6 carbon atoms.

The lithium salt represented by Chemical Formula 3 is added to an organic solvent and stirred, and then a Group 4 transition metal compound is added at a low temperature and allowed to react. The temperature at which the Group 4 transition metal compound is added may be -80 to 0 °C, for example, -55 to -10 °C. After the Group 4 transition metal compound is added, the reaction temperature is increased to room temperature, and stirring is continued. Thereafter, the solvent and byproducts are then removed to obtain a metallocene compound.

The Group 4 transition metal compound may include TiCl₄, ZrCl₄, or HfCl₄.

The metallocene catalyst precursor represented by Chemical Formula 2 may be prepared by the method described below.

In one embodiment, an organic lithium compound may be added to a tetrahydroindene compound represented by Chemical Formula 4 to prepare a tetrahydroindene lithium salt represented by Chemical Formula 5:

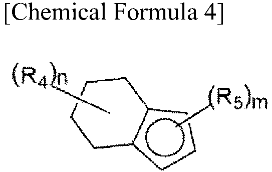

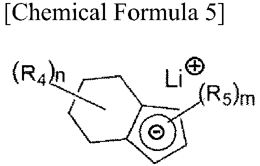

(In Chemical Formulas 4 and 5,
R₄, R₅, n, and m are as defined above.)

The tetrahydroindene lithium salt of Chemical Formula 5 may be allowed to react with a silane compound SiX₁X₂(X₃)₂ (X₁ and X₂ are each independently a C₁₋₂₀ alkyl group and a C₆₋₂₀ aryl group, and X₃ is a halogen group) to prepare a tetrahydroindenyl silane compound of Chemical Formula 6.

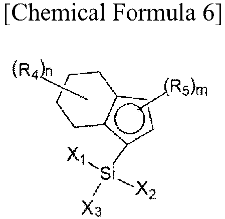

(In Chemical Formula 6,
R₄, R₅, n, and m are as defined above,
X₁ and X₂ are each independently a C₁₋₂₀ alkyl group and a C₆₋₂₀ aryl group, and X₃ is a halogen group.)

The tetrahydroindenyl silane compound of Chemical Formula 6 may be allowed to react with a lithium salt of an indenoindole compound of Chemical Formula 7 to prepare a metallocene catalyst precursor of Chemical Formula 2.

The indenoindole lithium salt of Chemical Formula 7 may be obtained by allowing an indenoindole compound of Chemical Formula 8 to react with an organic lithium compound.

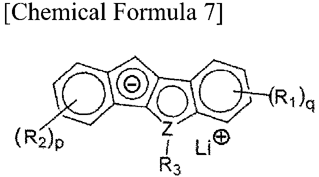

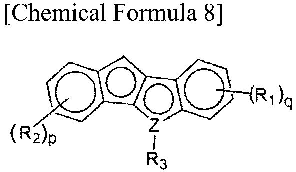

(In Chemical Formulas 7 and 8,
Z, R₁, R₂, R₃, p, and q are as defined above.)

Another aspect of the present invention relates to a supported metallocene catalyst. The supported metallocene catalyst includes a metallocene compound represented by Chemical Formula 1; and a carrier supporting the metallocene compound.

The carrier may be at least one selected from the group consisting of silica, silica-alumina, and silica-magnesia.

Still another aspect of the present invention relates to a catalyst for olefin polymerization. The catalyst for olefin polymerization may include the supported metallocene catalyst and a cocatalyst. The cocatalyst compound may be known cocatalyst compounds, such as a borate compound, methylaluminoxane, alkylaluminum, or alkylboron. However, the present invention is not limited thereto.

The olefin polymerization catalyst may be used to polymerize olefin monomers to prepare olefin polymers. The olefin monomers may be, for example, ethylene, propylene, 1-butene, 1-pentene, 4-methyl-1-pentene, 1-hexene, 1-heptene, 1-octene, 1-decene, 1-undecene, 1-dodecene, 1-tetradecene, and 1-hexadecene, and the olefin polymer may be a homopolymer or a copolymer. The olefin polymer may be prepared by, for example, a gas phase polymerization method, a solution polymerization method, or a slurry polymerization method. When the olefin polymer is prepared by the solution polymerization method or the slurry polymerization method, examples of the solvent used may include C₅₋₁₂ aliphatic hydrocarbon solvents such as pentane, hexane, heptane, nonane, decane, and isomers thereof; aromatic hydrocarbon solvents such as toluene and benzene; hydrocarbon solvents substituted with chlorine atoms such as dichloromethane and chlorobenzene; and mixtures thereof, but are not limited thereto.

Hereinafter, the present invention will be described in more detail through examples. However, these examples are for the purpose of explanation only and should not be construed as limiting the present invention.

### [Modes for carrying out the invention]

### Examples

### Example 1: Synthesis of Catalyst 1

### Preparation Example 1: Preparation of (5,8-dimethyl-5,10-dihydroindeno[1,2-b]indolyl)dimethyl(2-methyl-4,5,6,7-tetrahydro-1H-inden-1-yl)silane

### Preparation Example 1-1: Preparation of 2-methyl-2,3,4,5,6,7-hexahydro-1H-inden-1-one (2-1) (Step 1)

Polyphosphoric acid (10 mL) was added to cyclohexyl methacrylate (1) (4.4 g, 26.15 mmol) and stirred at 130 °C for 8 to 12 hours. The resulting viscous solution was poured into ice water (5 mL) and stirred until polyphosphoric acid was completely dissolved. 5 g of solid NH₄Cl was added to the brown solution and extracted with ether (30 mL). After separating the organic layer and the aqueous layer, the organic layer was washed with a saturated NaHCO₃ (10 mL) solution and then washed again with saturated brine (10 mL). After drying over MgSO₄, the solvent was carefully removed using a rotary evaporator. A 1:1 mixture of 2-methyl-2,3,4,5,6,7-hexahydro-1H-inden-1-one (2-1) and byproduct, 2-methyl-3a,4,5,6,7,7a-hexahydro-1H-inden-1-one (2-2), was obtained by short column chromatography purification using hexane as a solvent, and the obtained mixture had the following ¹H NMR spectrum.

¹H NMR (300 MHz, CDCl₃): 2.70 (m, 1H), 2.37 (m, 1H), 2.29 (m, 2H), 2.11 (m, 2H), 1.69 (m, 5H), 1.17 (d, 3H)

### Preparation Example 1-2: Preparation of 2-methyl-2,3,4,5,6,7-hexahydro-1H-inden-1-ol (3) (Step 2)

A mixture (1.6 g, 10.65 mmol) of 2-methyl-2,3,4,5,6,7-hexahydro-1H-inden-1-one (2-1) and 2-methyl-3a,4,5,6,7,7a-hexahydro-1H-inden-1-one (2-2) prepared in Preparation Example 1-1 was dissolved in ether (30 mL) and stirred at 0 °C. LiAlH₄ (162 mg, 4.27 mmol) was slowly added in three divided portions. The temperature was raised to room temperature, and stirring was performed for three hours. After confirming by thin-layer chromatography (TLC) that the reaction had proceeded completely, the temperature was lowered to 0 °C again. Distilled water (30 mL) was slowly added, and extraction was performed with ether (20 mL). The organic layer and the aqueous layer were separated. The obtained organic layer was washed once with saturated brine, dried over MgSO₄, and the solvent was removed using a rotary evaporator. The product was purified by column chromatography using an EA:Hex (1:4) solvent to obtain pure 2-methyl-2,3,4,5,6,7-hexahydro-1H-inden-1-ol (3) having the following ¹H NMR spectrum, with a two-step yield of 28%.

¹H NMR (300 MHz, C₆D₆): 4.21 (br. 1H), 2.34 (m, 1H), 2.19 (m, 2H), 1.80 (m, 4H), 1.51 (m, 4H), 1.04 (d, 3H)

### Preparation Example 1-3: Preparation of 2-methyl-4,5,6,7-tetrahydro-1H-indene (4-1) (Step 3)

2-Methyl-2,3,4,5,6,7-hexahydro-1H-inden-1-ol (3) (1.1 g, 7.32 mmol) prepared in Preparation Example 1-2 was dissolved in pentane (20 mL), MgSO₄ (150 mg) was added, and reflux was performed for eight hours. After slowly lowering the temperature, MgSO₄ was removed using a filter, and it was confirmed through the following ¹H NMR spectrum that 2-methyl-4,5,6,7-tetrahydro-1H-indene (4-1) and 2-methyl-2,4,5,6-tetrahydro-1H-indene (4-2) were prepared as a mixture in a ratio of nearly 1:1.

¹H NMR (300 MHz, CDCl₃): 5.88 (s, 1H), 2.25 (m. 2H), 2.08 (m, 2H), 2.01 (s, 3H), 1.67 (m, 4H), 1.65 (m, 2H)

### Preparation Example 1-4: Preparation of (2-methyl-4,5,6,7-tetrahydro-1H-inden-1-yl) lithium (5) (Step 4)

A pentane solution of 2-methyl-4,5,6,7-tetrahydro-1H-indene (4-1) and 2-methyl-2,4,5,6-tetrahydro-1H-indene (4-2) prepared in Preparation Example 1-3 was cooled to -78 °C, and then degassing was performed by connecting the flask to a Schlenk line to remove air. 7 mL of n-BuLi (1.6 M in hexane) solution was injected, the temperature was slowly raised to room temperature, and stirring was performed overnight. The produced white solid was collected by filtering and then washed sufficiently with hexane to remove 2-methyl-2,4,5,6-tetrahydro-1H-indene (4-2) and obtain clean (2-methyl-4,5,6,7-tetrahydro-1H-inden-1-yl) lithium (5) with a yield of 37%.

### Preparation Example 1-5: Preparation of chloro(2-methyl-4,5,6,7-tetrahydro-1H-inden-1-yl)dimethylsilane (6) (Step 5)

Dichlorodimethylsilane was slowly added to (2-methyl-4,5,6,7-tetrahydro-1H-inden-1-yl) lithium prepared in Preparation Example 1-4, stirred at room temperature, and LiCl was removed by filtering to obtain chloro(2-methyl-4,5,6,7-tetrahydro-1H-inden-1-yl)dimethylsilane (6) having the following ¹H NMR spectrum, with a yield of 56%.

¹H NMR (300 MHz, CDCl₃): 6.07 (s, 1H), 2.10 (s, 3H), 2.40-1.57 (m, 8H), 0.34 (s, 3H), 0.30 (s, 3H).

### Preparation Example 1-6: Preparation of 5,10-dihydroindeno[1,2-b]indole (8) (Step 6)

1-Indanone (7) (30.6 g, 232 mmol) was mixed with a solution of p-tolylhydrazine hydrochloride (37.0 g, 233 mmol) in EtOH (350 mL) and aqueous HCl (12 N, 18 mL), and the resulting mixture was heated to reflux for 90 minutes. The mixture was cooled and filtered, and the solid was washed with EtOH (600 mL), then with a 20% aqueous EtOH solution (400 mL), and finally with hexane (200 mL). The off-white solid was dried under vacuum (36.5 g, 72%).

### Preparation Example 1-7: Preparation of 5,8-dimethyl-5,10-dihydroindeno[1,2-b]indole (9) (Step 7)

5,10-Dihydroindeno[1,2-b]indole (36.5 g, 166 mmol) prepared in Preparation Example 1-6, a NaOH aqueous solution (112 mL, 20 M, 2.2 mol), C₁₆H₃₃NMe₃Br (0.65 g, 1.78 mmol), and toluene (112 mL) were stirred vigorously at room temperature. A solution of MeI (17.0 mL, 273 mmol) in toluene (15 mL) was added dropwise, stirred at room temperature for four hours, and refluxed for three hours. Upon cooling, a crystalline solid was formed, filtered, washed at - 78 °C (300 mL), and then washed with hexane (100 mL). Layers were separated, and the aqueous portion was washed twice with toluene (100 mL). The organic portions were combined, dried over Na₂SO₄, and filtered. The volatile materials were removed under vacuum, and the precipitate was dried to obtain 5,8-dimethyl-5,10-dihydroindeno[1,2-b]indole (total yield 25.7 g, 66%).

### Preparation Example 1-8: Preparation of 5,8-dimethyl-5,10-dihydroindeno[1,2-b]indole] lithium salt (10) (Step 8)

5,8-Dimethyl-5,10-dihydroindeno[1,2-b]indole (43.9 g, 188 mmol) prepared in Preparation Example 1-7 was dissolved in toluene (560 mL), and n-butyllithium (n-BuLi) (120 mL, 2.5 M, 1.6 mol) was added dropwise to the resulting solution. After one hour, a precipitate was formed, which was allowed to stand for 48 hours and then filtered. The solid was washed with toluene (500 mL), then with hexane (500 mL), and dried under vacuum to obtain 5,8-dimethyl-5,10-dihydroindeno[1,2-b]indole] lithium salt (10) as a white solid (40.3 g, 90%).

### Preparation Example 1-9: Synthesis of (5,8-dimethyl-5,10-dihydroindeno[1,2-b]indolyl)dimethyl(2-methyl-4,5,6,7-tetrahydro-1H-inden-1-yl)silane (11) (Step 9)

Chloro(2-methyl-4,5,6,7-tetrahydro-1H-inden-1-yl)dimethylsilane (6) (200 mg, 0.89 mmol) prepared in Preparation Example 1-5 was dissolved in ether (10 mL), and the resulting solution was cooled to -30 °C. The white solid prepared in Preparation Example 1-8, 5,8-dimethyl-5,10-dihydroindeno[1,2-b]indole] lithium salt (10) (211 mg, 0.89 mmol), was slowly added thereto and stirred overnight at room temperature. Water and a saturated NH₄Cl solution were slowly added to terminate the reaction, and the resulting mixture was extracted with ether, treated with MgSO₄ to remove moisture, and then dried. The crude product was purified by column chromatography (hexane 100%) and dried to obtain a clean compound (rac/meso = 1:1) (243 mg, 65%).

¹H NMR (300 MHz, CDCl₃): 7.65-7.03 (m, 7H), 6.10 (s, 0.5H), 6.09 (s, 0.5H), 4.08 (s, 1.5H), 4.07 (s, 1.5H), 3.48-3.46 (m, 1H), 3.38 (br s, 1H), 2.47 (s, 1.5H), 2.46 (s, 1.5H), 2.13 (s, 1.5H), 2.08 (s, 1.5H), 1.84-1.81 (m, 2H), 1.70-1.60 (m, 4H), 1.30-1.25 (m, 2H), -0.21 (s, 1.5H), -0.34 (s, 1.5H), -0.40 (s, 1.5H), -0.45 (s, 1.5H)

### Preparation Example 1-10: Synthesis of dimethylsilyl(2-methyl-4,5,6,7-tetrahydro-1H-inden-1-yl)(5,8-dimethyl-5,10-dihydroindeno[1,2-b]indoleyl dilithium (12) (Step 10)

(5,8-Dimethyl-5,10-dihydroindeno[1,2-b]indolyl)dimethyl(2-methyl-4,5,6,7-tetrahydro-1H-inden-1-yl)silane (11) (243 mg, 0.57 mmol) prepared in Preparation Example 1-9 was dissolved in hexane (10 mL), and 430 µL of n-BuLi ((1.6 M in hexane) was slowly added dropwise to the resulting solution and stirred overnight at room temperature. After confirming that the transparent solution had changed to a white suspension, the hexane solvent was removed by filtering, and the obtained white solid was dried to obtain dimethylsilyl(2-methyl-4,5,6,7-tetrahydro-1H-inden-1-yl)(5,8-dimethyl-5,10-dihydroindeno[1,2-b]indoleyl dilithium (12) (250 mg, 100%).

### Preparation Example 1-11: Synthesis of [dimethylsilyl(2-methyl-4,5,6,7-tetrahydro-1H-inden-1-yl)(5,8-dimethyl-5,10-dihydroindeno[1,2-blindoleyl zirconium dichloride (Catalyst 1) (Step 11)

Dimethylsilyl(2-methyl-4,5,6,7-tetrahydro-1H-inden-1-yl)(5,8-dimethyl-5,10-dihydroindeno[1,2-b]indoleyl dilithium (12) (250 mg, 0.57 mmol) was added to ether (15 mL), stirred, and cooled to -30 °C. ZrCl₄ (133 mg, 0.57 mmol) was added to the resulting solution, and the resulting mixture was slowly warmed to room temperature and stirred overnight. After removing ether using a vacuum pump, the catalyst was extracted with toluene, and LiCl was removed using a filter to obtain pure Catalyst 1 (rac/meso = 3:2) with a yield of 78%.

¹H NMR (300 MHz, CDCl₃): 8.02-7.08 (m, 7H), 6.57 (s, 0.4H), 6.39 (s, 0.6H), 4.15 (s, 1.8H), 4.10 (s, 1.2H), 2.82 (s, 1.2H), 2.48 (s, 1.8H), 2.13 (s, 1.8H), 1.89 (s, 1.2H), 2.92-2.81 (m, 2H), 2.61-2.40 (m, 6H), 1.38 (s, 1.2H), 1.34 (s, 1.8H), 1.31 (s, 1.8H), 1.28 (s, 1.2H)

### Preparation Examples 2 to 17

Metallocene catalyst precursors were synthesized by modifying the substituents of the tetrahydroindene compound of Chemical Formula 3 and the indenoindole lithium salt of Chemical Formula 4, and the following Chemical Formulas (2-2) to (2-17) were obtained:

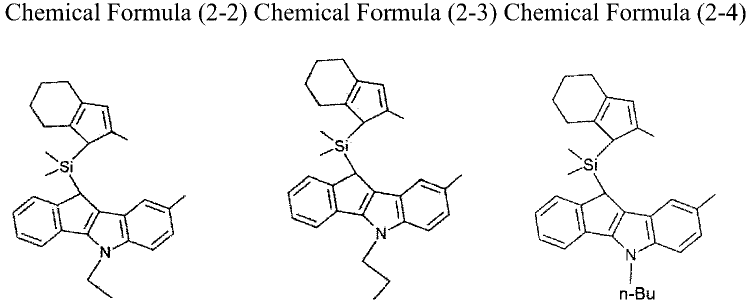

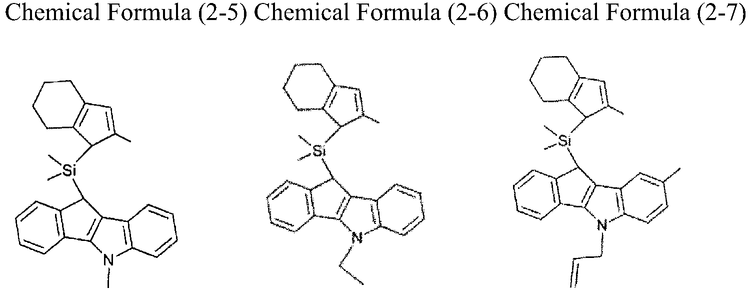

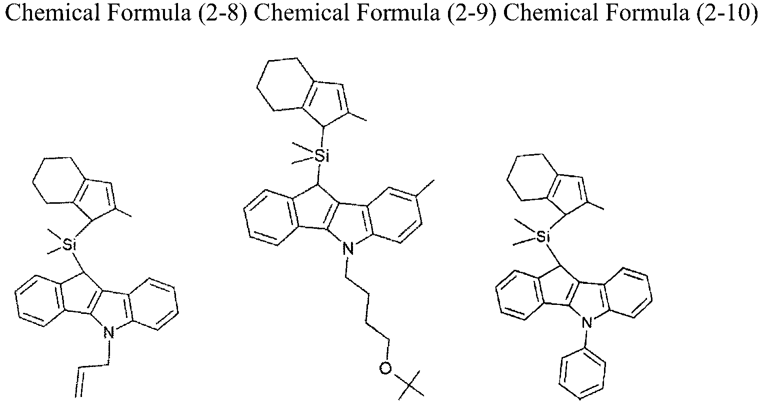

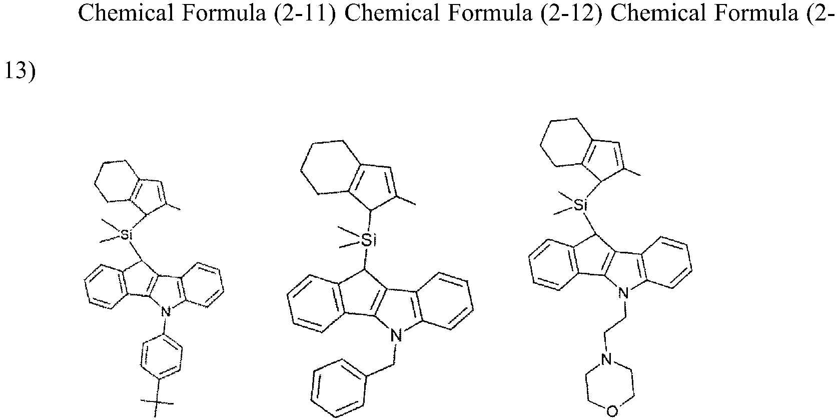

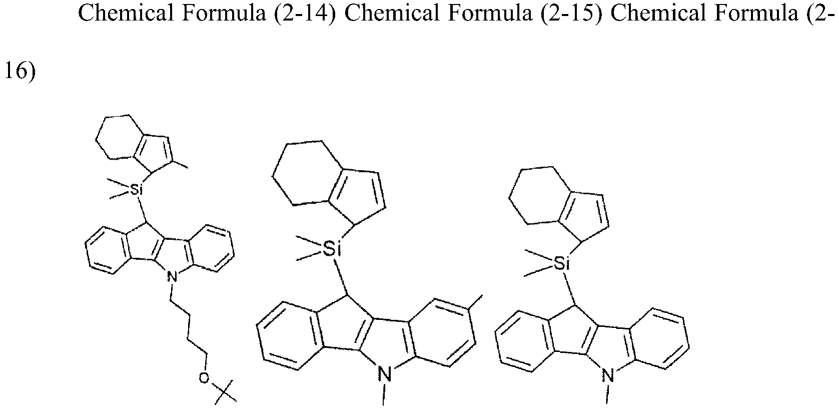

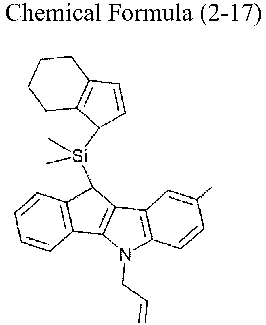

### Examples 2 to 17: Synthesis of Catalysts 2 to 17

The procedure was carried out in the same manner as in Example 1, except that compounds (2-2) to (2-17) were used as precursors in place of (5,8-dimethyl-5,10-dihydroindeno[1,2-b]indolyl)dimethyl(2-methyl-4,5,6,7-tetrahydro-1H-inden-1-yl)silane (11).

The structures of the resulting catalysts are shown in the following Chemical Formulas (1-2) to (1-17):

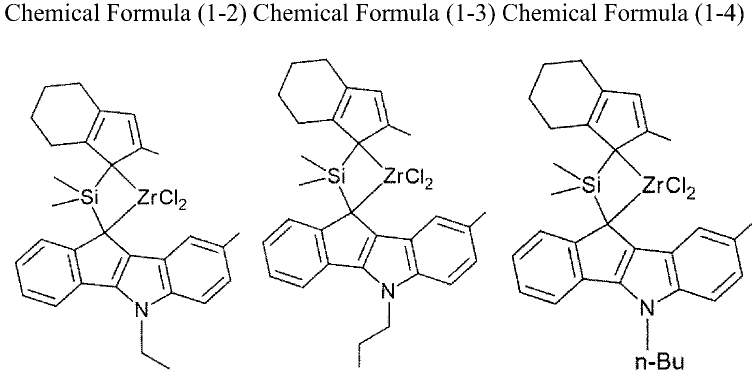

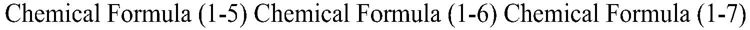

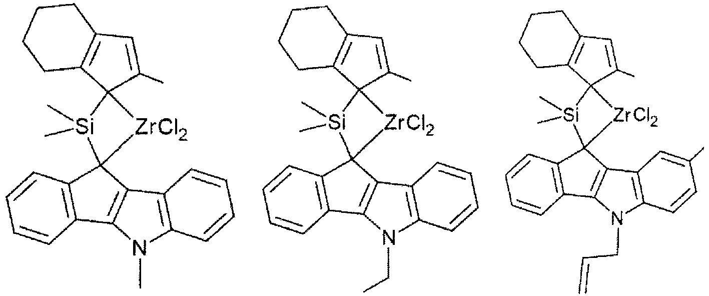

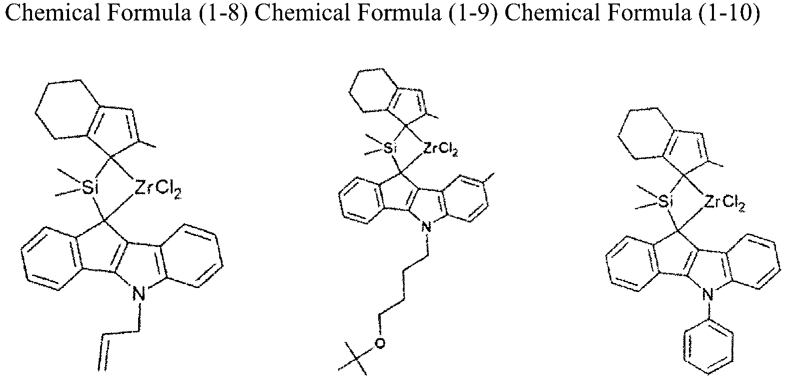

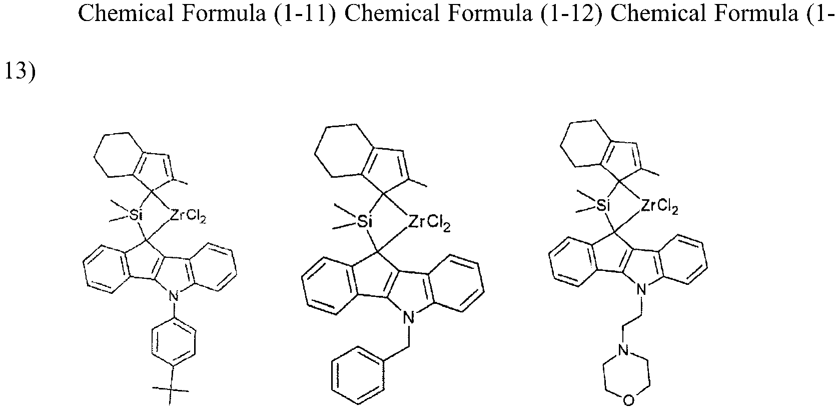

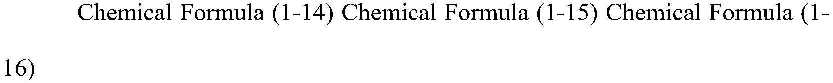

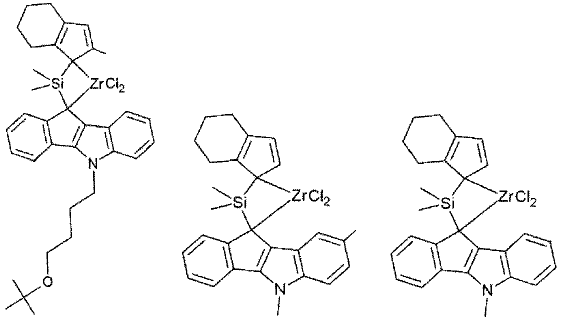

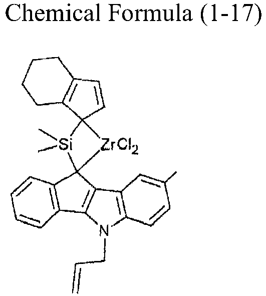

Simple modifications or changes of the present invention may be easily implemented by one of ordinary skill in the art, and all such modifications or changes may be considered to be included in the scope of the present invention.

## Claims

1. A metallocene compound represented by the following Chemical Formula 1 : 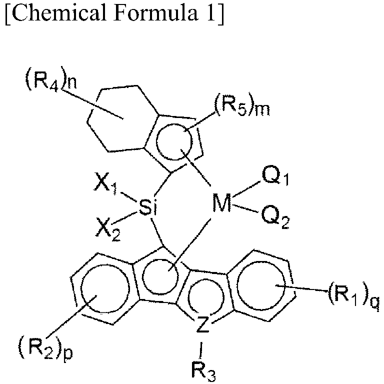 wherein, in Chemical Formula 1,
M is titanium (Ti), zirconium (Zr), or hafnium (Hf),
Z is N,
R₁ and R₂ are each independently hydrogen, a halogen, a substituted or unsubstituted C₁₋₂₀ alkyl group, a substituted or unsubstituted C₂₋₂₀ alkenyl group, a substituted or unsubstituted C₆₋₂₀ aryl group, a substituted or unsubstituted C₁₋₂₀ heteroalkyl group, a substituted or unsubstituted C₃₋₂₀ heteroaryl group, a substituted or unsubstituted C₁₋₂₀ alkylamido group, or a substituted or unsubstituted C₆₋₂₀ arylamido group,
R₃ is a substituted or unsubstituted C₁₋₂₀ alkyl group, a substituted or unsubstituted C₁₋₂₀ alkoxy group, a substituted or unsubstituted C₂₋₂₀ alkoxyalkyl group, a substituted or unsubstituted C₂₋₂₀ alkenyl group, a substituted or unsubstituted C₃₋₂₀ cycloalkyl group, a substituted or unsubstituted C₃₋₂₀ heterocycloalkyl group, a substituted or unsubstituted C₇₋₄₀ alkylaryl group, a substituted or unsubstituted C₇₋₄₀ arylalkyl group, a substituted or unsubstituted C₆₋₂₀ aryl group, a substituted or unsubstituted C₆₋₂₀ aryloxy group, or a substituted or unsubstituted C₃₋₂₀ heteroaryl group,
R₄ and R₅ are each independently hydrogen, a halogen, a substituted or unsubstituted C₁₋₂₀ alkyl group, or a substituted or unsubstituted C₆₋₂₀ aryl group,
n is an integer from 0 to 4,
m is an integer from 0 to 2,
p and q are each independently an integer from 0 to 4, and
X₁ and X₂ are each independently a C₁₋₂₀ alkyl group or a C₆₋₂₀ aryl group, and
Q₁ and Q₂ are each independently a halogen, a C₁₋₂₀ alkyl group, or a C₆₋₂₀ aryl group.

2. The metallocene compound of claim 1, wherein M is zirconium (Zr),
R₁ and R₂ are each a C₁₋₃ alkyl group,
P is 0, q is 0 or 1,
R₄ and R₅ are a C₁₋₃ alkyl group,
n is 0, and m is 0 or 1.

3. The metallocene compound of claim 1, wherein M is zirconium (Zr),
X₁ and X₂ are each independently a C₁₋₂₀ alkyl group, and Q₁ and Q₂ are each independently a halogen.

4. The metallocene compound of claim 1, wherein R₃ has 1 to 10 carbon atoms.

5. The metallocene compound of claim 1, wherein the metallocene compound is represented by one of the following structures:

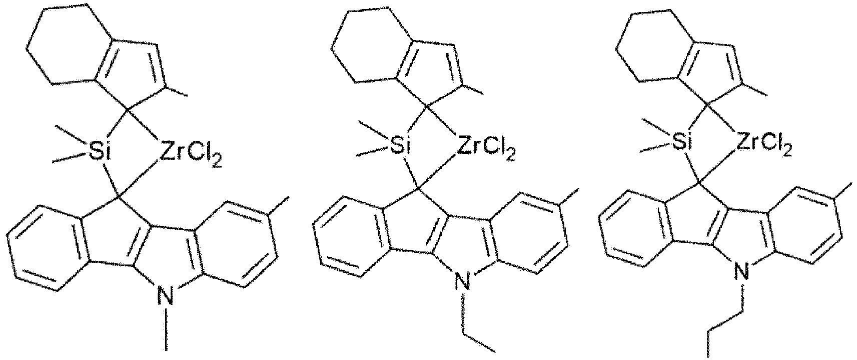

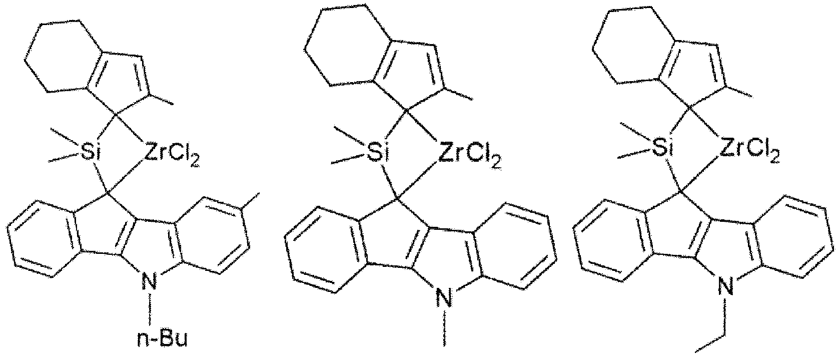

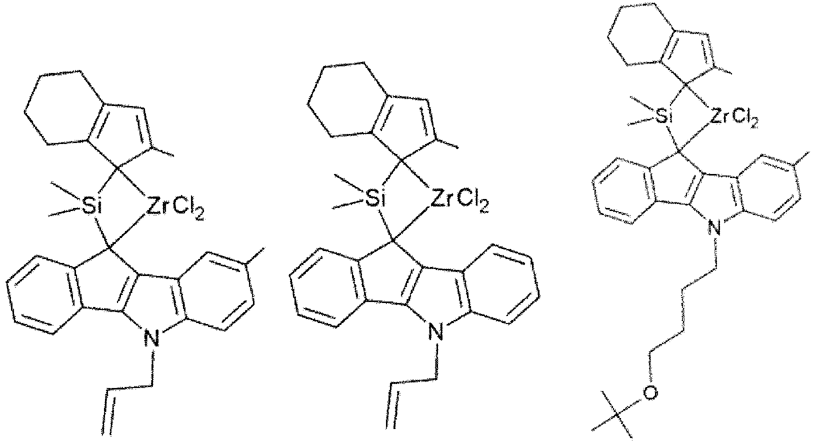

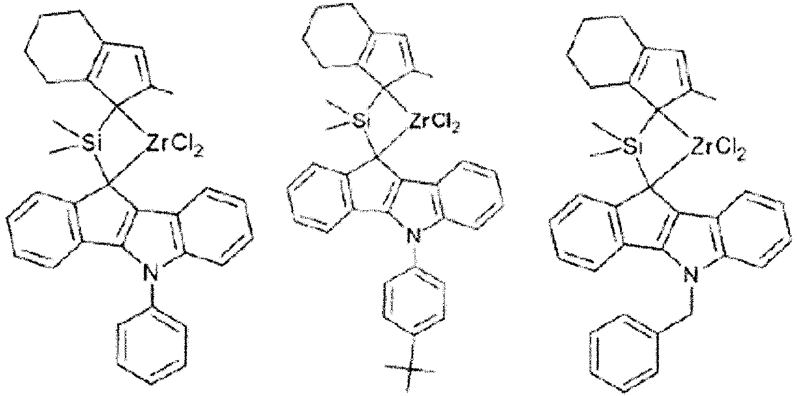

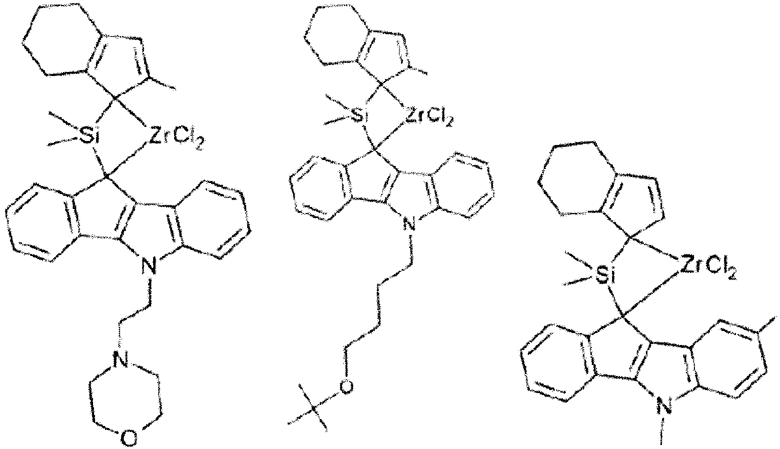

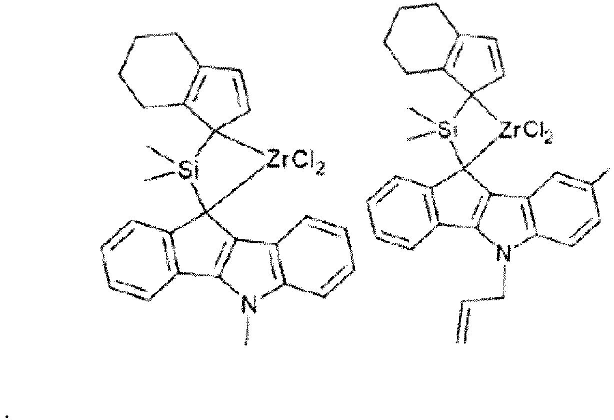

6. The metallocene compound of claim 1, wherein the metallocene compound has a compound represented by the following Chemical Formula 2 as a metallocene catalyst precursor: 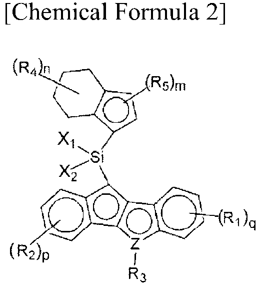 wherein, in Chemical Formula 2,
Z is N,
R₁ and R₂ are each independently hydrogen, a halogen, a substituted or unsubstituted C₁₋₂₀ alkyl group, a substituted or unsubstituted C₂₋₂₀ alkenyl group, a substituted or unsubstituted C₆₋₂₀ aryl group, a substituted or unsubstituted C₁₋₂₀ heteroalkyl group, a substituted or unsubstituted C₃₋₂₀ heteroaryl group, a substituted or unsubstituted C₁₋₂₀ alkylamido group, or a substituted or unsubstituted C₆₋₂₀ arylamido group,
R₃ is a substituted or unsubstituted C₁₋₂₀ alkyl group, a substituted or unsubstituted C₁₋₂₀ alkoxy group, a substituted or unsubstituted C₂₋₂₀ alkoxyalkyl group, a substituted or unsubstituted C₂₋₂₀ alkenyl group, a substituted or unsubstituted C₃₋₂₀ cycloalkyl group, a substituted or unsubstituted C₃₋₂₀ heterocycloalkyl group, a substituted or unsubstituted C₇₋₄₀ alkylaryl group, a substituted or unsubstituted C₇₋₄₀ arylalkyl group, a substituted or unsubstituted C₆₋₂₀ aryl group, a substituted or unsubstituted C₆₋₂₀ aryloxy group, or a substituted or unsubstituted C₃₋₂₀ heteroaryl group,
R₄ and R₅ are each independently hydrogen, a halogen, a substituted or unsubstituted C₁₋₂₀ alkyl group, or a substituted or unsubstituted C₆₋₂₀ aryl group,
n is an integer from 0 to 4,
m is an integer from 0 to 2,
p and q are each independently an integer from 0 to 4, and
X₁ and X₂ are each independently a C₁₋₂₀ alkyl group or a C₆₋₂₀ aryl group.

7. The metallocene compound of claim 6, wherein the metallocene catalyst precursor is represented by one of the following structures:

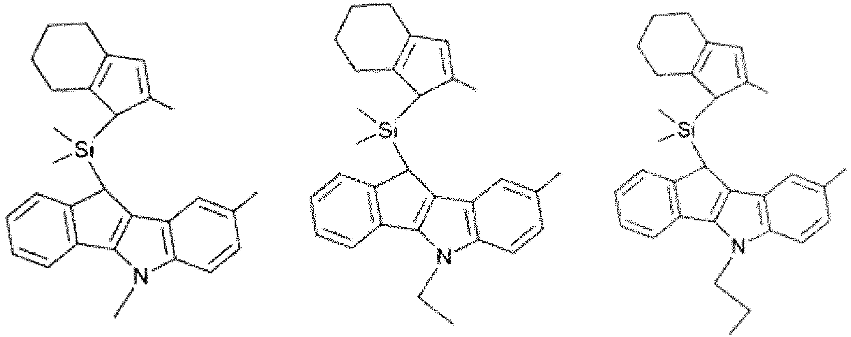

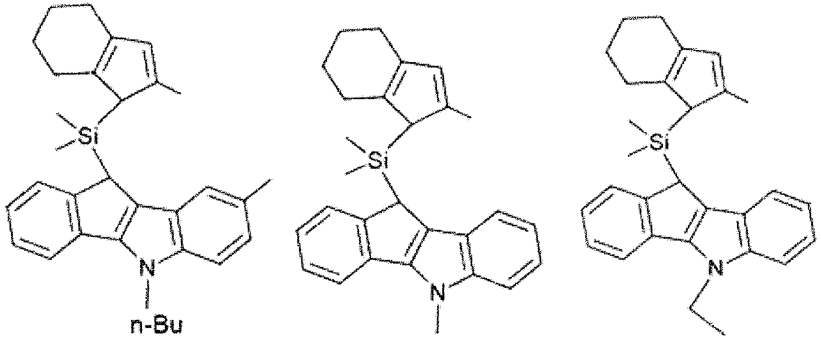

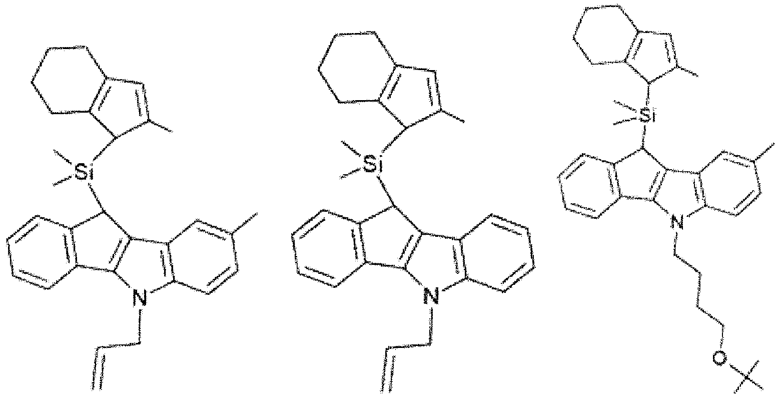

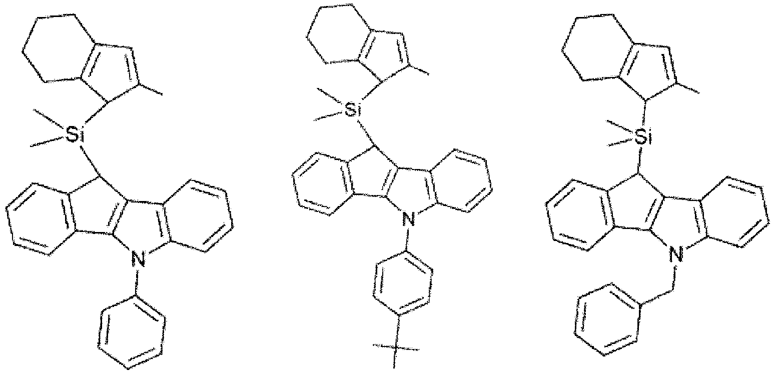

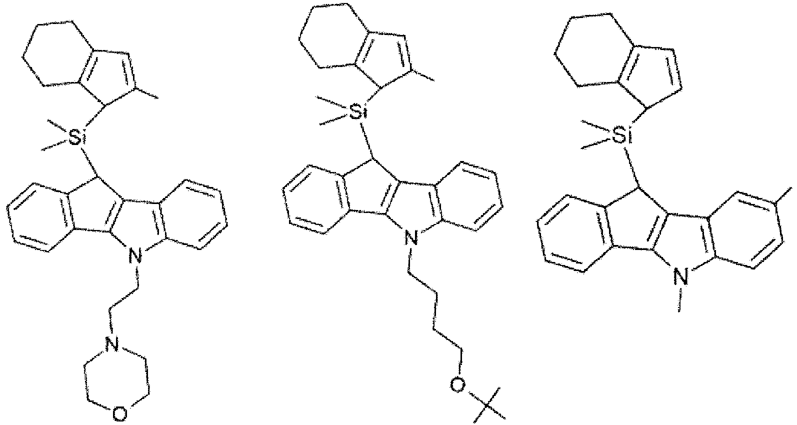

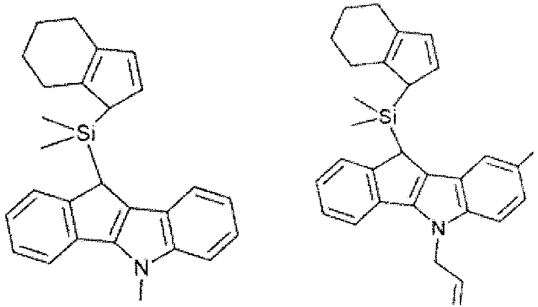

8. The metallocene compound of claim 6, wherein the metallocene compound is prepared by:
a step of adding an organic lithium compound to the metallocene catalyst precursor to prepare a lithium salt; and
a step of allowing the lithium salt to react with a Group 4 transition metal compound.

9. A metallocene catalyst precursor represented by the following Chemical Formula 2: 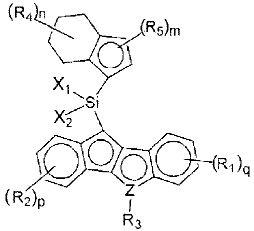 wherein, in Chemical Formula 2,
Z is N,
R₁ and R₂ are each independently hydrogen, a halogen, a substituted or unsubstituted C₁₋₂₀ alkyl group, a substituted or unsubstituted C₂₋₂₀ alkenyl group, a substituted or unsubstituted C₆₋₂₀ aryl group, a substituted or unsubstituted C₁₋₂₀ heteroalkyl group, a substituted or unsubstituted C₃₋₂₀ heteroaryl group, a substituted or unsubstituted C₁₋₂₀ alkylamido group, or a substituted or unsubstituted C₆₋₂₀ arylamido group,
R₃ is a substituted or unsubstituted C₁₋₂₀ alkyl group, a substituted or unsubstituted C₁₋₂₀ alkoxy group, a substituted or unsubstituted C₂₋₂₀ alkoxyalkyl group, a substituted or unsubstituted C₂₋₂₀ alkenyl group, a substituted or unsubstituted C₃₋₂₀ cycloalkyl group, a substituted or unsubstituted C₃₋₂₀ heterocycloalkyl group, a substituted or unsubstituted C₇₋₄₀ alkylaryl group, a substituted or unsubstituted C₇₋₄₀ arylalkyl group, a substituted or unsubstituted C₆₋₂₀ aryl group, a substituted or unsubstituted C₆₋₂₀ aryloxy group, or a substituted or unsubstituted C₃₋₂₀ heteroaryl group,
R₄ and R₅ are each independently hydrogen, a halogen, a substituted or unsubstituted C₁₋₂₀ alkyl group, or a substituted or unsubstituted C₆₋₂₀ aryl group,
n is an integer from 0 to 4,
m is an integer from 0 to 2,
p and q are each independently an integer from 0 to 4, and
X₁ and X₂ are each independently a C₁₋₂₀ alkyl group or a C₆₋₂₀ aryl group.

10. The metallocene catalyst precursor of claim 9, wherein the metallocene catalyst precursor is represented by one of the following structures: 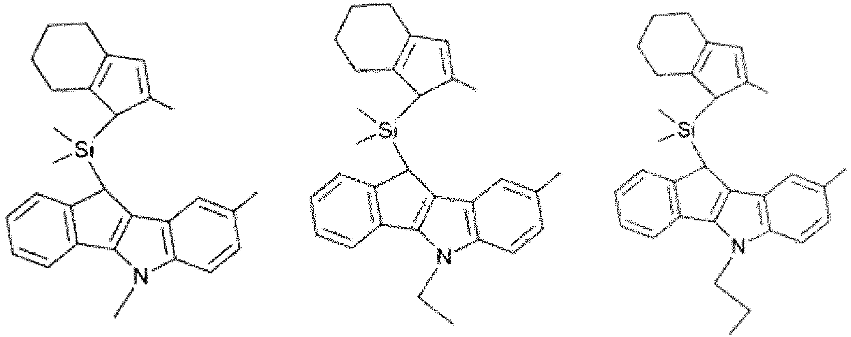 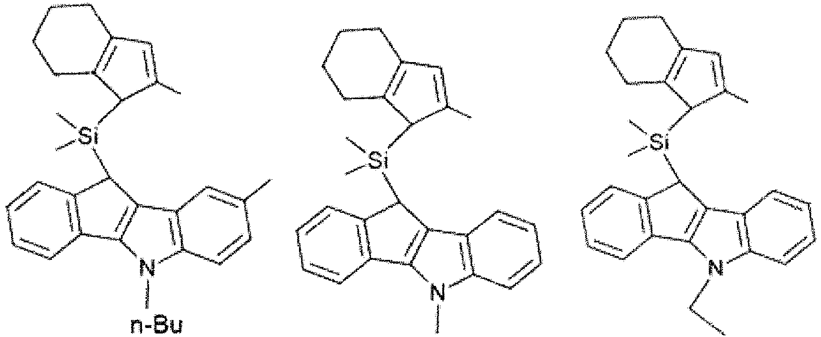 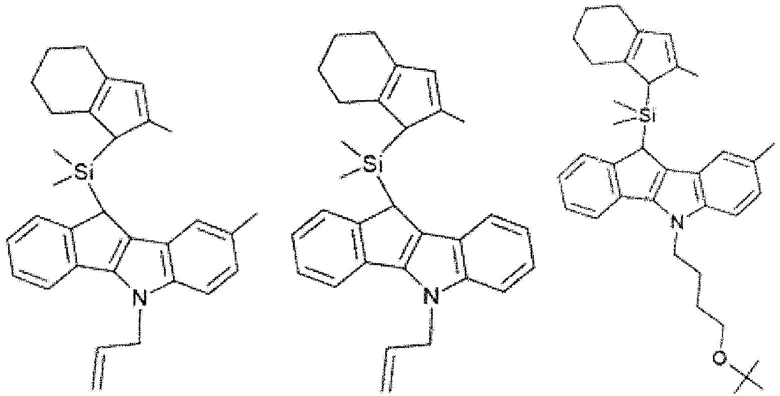 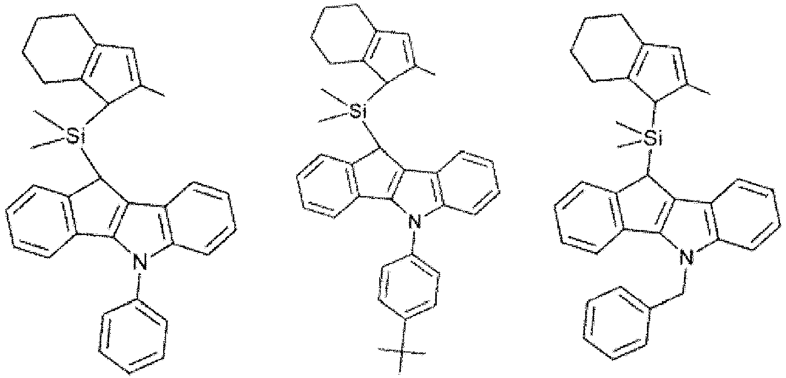 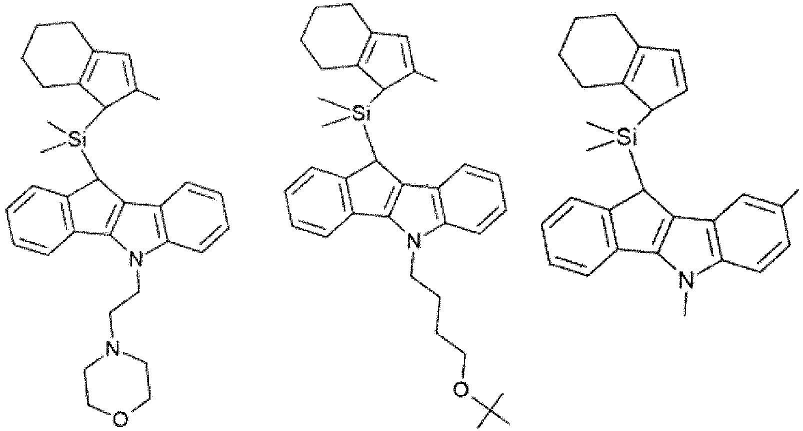 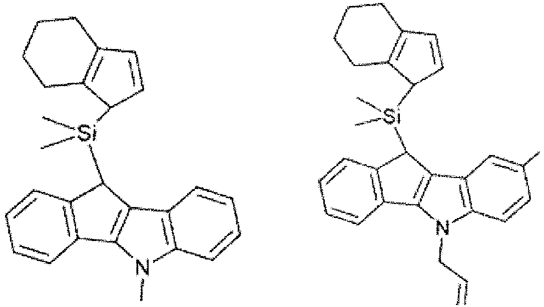 .

11. A supported metallocene catalyst comprising:
a metallocene compound represented by the following Chemical Formula 1; and
a carrier supporting the metallocene compound: 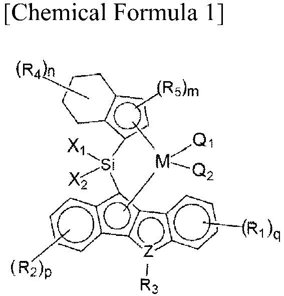
wherein, in Chemical Formula 1,
M is titanium (Ti), zirconium (Zr), or hafnium (Hf),
Z is N,
R₁ and R₂ are each independently hydrogen, a halogen, a substituted or unsubstituted C₁₋₂₀ alkyl group, a substituted or unsubstituted C₂₋₂₀ alkenyl group, a substituted or unsubstituted C₆₋₂₀ aryl group, a substituted or unsubstituted C₁₋₂₀ heteroalkyl group, a substituted or unsubstituted C₃₋₂₀ heteroaryl group, a substituted or unsubstituted C₁₋₂₀ alkylamido group, or a substituted or unsubstituted C₆₋₂₀ arylamido group,
R₃ is a substituted or unsubstituted C₁₋₂₀ alkyl group, a substituted or unsubstituted C₁₋₂₀ alkoxy group, a substituted or unsubstituted C₂₋₂₀ alkoxyalkyl group, a substituted or unsubstituted C₂₋₂₀ alkenyl group, a substituted or unsubstituted C₃₋₂₀ cycloalkyl group, a substituted or unsubstituted C₃₋₂₀ heterocycloalkyl group, a substituted or unsubstituted C₇₋₄₀ alkylaryl group, a substituted or unsubstituted C₇₋₄₀ arylalkyl group, a substituted or unsubstituted C₆₋₂₀ aryl group, a substituted or unsubstituted C₆₋₂₀ aryloxy group, or a substituted or unsubstituted C₃₋₂₀ heteroaryl group,
R₄ and R₅ are each independently hydrogen, a halogen, a substituted or unsubstituted C₁₋₂₀ alkyl group, or a substituted or unsubstituted C₆₋₂₀ aryl group,
n is an integer from 0 to 4,
m is an integer from 0 to 2,
p and q are each independently an integer from 0 to 4, and
X₁ and X₂ are each independently a C₁₋₂₀ alkyl group or a C₆₋₂₀ aryl group, and
Q₁ and Q₂ are each independently a halogen, a C₁₋₂₀ alkyl group, or a C₆₋₂₀ aryl group.

12. The supported metallocene catalyst of claim 11, wherein the metallocene compound has a compound represented by the following Chemical Formula 2 as a precursor: 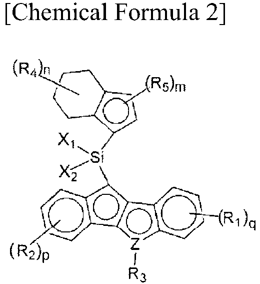 wherein, in Chemical Formula 2,
Z is N,
R₁ and R₂ are each independently hydrogen, a halogen, a substituted or unsubstituted C₁₋₂₀ alkyl group, a substituted or unsubstituted C₂₋₂₀ alkenyl group, a substituted or unsubstituted C₆₋₂₀ aryl group, a substituted or unsubstituted C₁₋₂₀ heteroalkyl group, a substituted or unsubstituted C₃₋₂₀ heteroaryl group, a substituted or unsubstituted C₁₋₂₀ alkylamido group, or a substituted or unsubstituted C₆₋₂₀ arylamido group,
R₃ is a substituted or unsubstituted C₁₋₂₀ alkyl group, a substituted or unsubstituted C₁₋₂₀ alkoxy group, a substituted or unsubstituted C₂₋₂₀ alkoxyalkyl group, a substituted or unsubstituted C₂₋₂₀ alkenyl group, a substituted or unsubstituted C₃₋₂₀ cycloalkyl group, a substituted or unsubstituted C₃₋₂₀ heterocycloalkyl group, a substituted or unsubstituted C₇₋₄₀ alkylaryl group, a substituted or unsubstituted C₇₋₄₀ arylalkyl group, a substituted or unsubstituted C₆₋₂₀ aryl group, a substituted or unsubstituted C₆₋₂₀ aryloxy group, or a substituted or unsubstituted C₃₋₂₀ heteroaryl group,
R₄ and R₅ are each independently hydrogen, a halogen, a substituted or unsubstituted C₁₋₂₀ alkyl group, or a substituted or unsubstituted C₆₋₂₀ aryl group,
n is an integer from 0 to 4,
m is an integer from 0 to 2,
p and q are each independently an integer from 0 to 4, and
X₁ and X₂ are each independently a C₁₋₂₀ alkyl group or a C₆₋₂₀ aryl group.

13. The supported metallocene catalyst of claim 11, wherein R₃ has 1 to 10 carbon atoms.

14. The supported metallocene catalyst of claim 11, wherein the carrier is at least one selected from the group consisting of silica, silica-alumina, and silica-magnesia.

15. The supported metallocene catalyst of claim 11, further comprising a cocatalyst.
